# EUROPEAN PATENT APPLICATION

(11) **EP 4 746 499 A1**
(43) Date of publication of application: **20.05.2026**
(21) Application number: 24853743.3
(22) Date of filing: 12.08.2024
(51) Int. Cl.: H04W 24/08

(54) **SIGNAL STRENGTH MEASUREMENT SYSTEM, METHOD, AND APPARATUS**

(30) Priority: 16.08.2023 CN 202311038783
(71) Applicant: Huawei Technologies Co., Ltd., Shenzhen, Guangdong 518129 (CN)
(72) Inventor: HE, Yuan, Shenzhen, Guangdong 518129 (CN); ZHANG, Hao, Shenzhen, Guangdong 518129 (CN); BAO, Dewei, Shenzhen, Guangdong 518129 (CN); DING, Lv, Shenzhen, Guangdong 518129 (CN); YANG, Le, Shenzhen, Guangdong 518129 (CN)
(74) Representative: Maiwald GmbH
(86) International application number: PCT/CN2024/111531
(87) International publication number: WO 2025/036334

(57) **Abstract**

A signal strength measurement system and method, and an apparatus are provided, and are related to the field of communication technologies, so that an access point AP can obtain more signal strengths. The system includes a first AP and one or a plurality of second APs. Each second AP receives a scanning synchronization message indicating at least one target scanning channel, where the scanning synchronization message indicates each second AP to switch a scanning channel in a sequence of the at least one target scanning channel. When determining that a scanning channel is an operating channel of the first AP, the first AP sends, to each second AP, a coordinated scanning measurement request carrying an identifier of each terminal device associated with the first AP, to request each second AP to initiate a measurement request to each terminal device. When a scanning channel of any second AP is switched to the operating channel of the first AP, the any second AP sends the measurement request to each terminal device. The first AP obtains a measurement result, where the measurement result indicates a signal strength between each of at least one second AP and at least one terminal device.

## Description

This application claims priority to Chinese Patent Application No. 202311038783.8, filed with the China National Intellectual Property Administration on August 16, 2023 and entitled "SIGNAL STRENGTH MEASUREMENT SYSTEM AND METHOD, AND APPARATUS", which is incorporated herein by reference in its entirety.

### TECHNICAL FIELD

This application relates to the field of communication technologies, and in particular, to a signal strength measurement system and method, and an apparatus.

### BACKGROUND

In a wireless local area network (wireless local area network, WLAN) communication system, an access point (access point, AP) usually implements a management policy like radio frequency resource management or roaming steering. If the AP can obtain more signal strengths (for example, a signal strength between another AP in the WLAN communication system and a terminal device associated with the AP) when implementing the management policy, an implementation effect of the management policy can be improved.

### SUMMARY

This application provides a signal strength measurement system and method, and an apparatus, so that an AP can obtain more signal strengths.

According to a first aspect, this application provides a signal strength measurement system, where the system may include a plurality of access points APs, the plurality of APs include a first AP and one or a plurality of second APs. The one or the plurality of second APs are configured to receive a scanning synchronization message, where the scanning synchronization message indicates at least one target scanning channel, and the scanning synchronization message indicates each second AP to switch a scanning channel in a sequence of the at least one target scanning channel. The first AP is configured to: when determining that a scanning channel of the system is an operating channel of the first AP, send a coordinated scanning measurement request to the one or the plurality of second APs, where the coordinated scanning measurement request carries an identifier of one or more terminal devices, the coordinated scanning measurement request is used to request each second AP to initiate a measurement request to the one or more terminal devices, and the one or more terminal devices are terminal devices associated with the first AP. Any second AP is further configured to: when a scanning channel of the any second AP is switched to the operating channel of the first AP, initiate the measurement request to the one or more terminal devices. The first AP is further configured to obtain a measurement result, where the measurement result indicates a signal strength between each of at least one second AP and at least one terminal device, the one or the plurality of second APs include the at least one second AP, and the one or more terminal devices include the at least one terminal device.

Based on the first aspect, the scanning synchronization message is sent to a plurality of APs in a WLAN system, to indicate the plurality of APs to switch, after receiving the scanning synchronization message, scanning channels in the sequence of the at least one target scanning channel indicated by the scanning synchronization message, so that the plurality of APs can switch to a same scanning channel simultaneously or simultaneously as much as possible. In this way, the first AP whose operating channel is the scanning channel can obtain, in one time of coordinated scanning measurement, signal strengths between more second APs and a terminal device associated with the first AP, and a coordinated scanning measurement effect can be improved, so that management policies such as radio frequency resource management and roaming policies are better supported, and communication performance is improved.

In a possible design, the first AP is further configured to send the scanning synchronization message, and the at least one target scanning channel is the operating channel of the first AP.

Based on the possible design, the first AP may actively send the scanning synchronization message to the one or the plurality of second APs based on a detection requirement, where the scanning synchronization message indicates a target scanning channel, and the target scanning channel is the operating channel of the first AP, in other words, the scanning synchronization message indicates the one or the plurality of second APs to switch from a scanning channel to the operating channel of the first AP. After receiving the scanning synchronization message, all the one or the plurality of second APs may switch from the scanning channel to the operating channel of the first AP simultaneously or simultaneously as much as possible, and when receiving the coordinated scanning measurement request sent by the first AP, send, on the operating channel of the first AP, the measurement request to the one or more terminal devices associated with the first AP. In this way, the first AP can obtain, in one time of coordinated scanning measurement, signal strengths between more second APs and the one or more terminal devices associated with the first AP.

In a possible design, the coordinated scanning measurement request is carried in the scanning synchronization message.

Based on the possible design, when the scanning synchronization message is sent by the first AP to the one or the plurality of second APs, the first AP may include the coordinated scanning measurement request in the scanning synchronization message, to reduce signaling overheads. It may be understood that, the first AP may alternatively send the scanning synchronization message and the coordinated scanning measurement request separately. This is not limited.

In a possible design, the system further includes a first device, and the first device is configured to send the scanning synchronization message to the plurality of APs.

Based on the possible design, the first device may send the scanning synchronization message to a plurality of APs managed by the first device. All the APs that receive the scanning synchronization message may switch, in the sequence of the at least one target scanning channel indicated by the scanning synchronization message, from scanning channels to a same target scanning channel in the at least one target scanning channel simultaneously or simultaneously as much as possible, to synchronize or to synchronize as much as possible, scanning occasions of the APs for the same scanning channel.

In a possible design, the first AP is further configured to: switch from a scanning channel of the first AP to a target scanning channel in the at least one target scanning channel in the sequence of the at least one target scanning channel; and when the scanning channel of the first AP is switched to the operating channel of the first AP, determine that the scanning channel of the system is the operating channel of the first AP.

Based on the possible design, the first AP may synchronize a scanning occasion with another AP (for example, each second AP) based on the scanning synchronization message. When the scanning channel of the first AP is switched to the operating channel of the first AP, the first AP may trigger a coordinated scanning measurement process, to obtain signal strengths between more second APs and a terminal device associated with the first AP, and improve the coordinated scanning measurement effect. In this way, the management policies such as radio frequency resource management and roaming policies are better supported, and the communication performance is improved.

In a possible design, the first AP is further configured to send first indication information to the first device, where the first indication information indicates a first target scanning channel, and the first target scanning channel is the operating channel of the first AP. The first device is further configured to generate the scanning synchronization message based on the first indication information, where the at least one target scanning channel includes the first target scanning channel.

Based on the possible design, the first device may generate and send the scanning synchronization message based on the first indication information sent by the first AP, so that all APs that receive the scanning synchronization message switch from scanning channels to the operating channel of the first AP simultaneously or simultaneously as much as possible.

In a possible design, the first device is further configured to: periodically send the scanning synchronization message to the plurality of APs; send the scanning synchronization message to the plurality of APs in a preset time period; or send the scanning synchronization message to the plurality of APs in response to a difference between scanning channels of at least two APs being greater than or equal to a channel difference threshold.

Based on the possible design, the first device may send the scanning synchronization message to each AP in any one of the foregoing manners, so that a problem of scanning occasion asynchronization can be detected in time, or scanning occasion synchronization can be performed in time. In this way, synchronization of scanning channels of APs is further improved.

In a possible design, the first device is further configured to send a scanning synchronization inquiry request to the plurality of APs, where the scanning synchronization inquiry request is used to request a scanning channel to which each AP switches last time. Any AP in the plurality of APs is further configured to: receive the scanning synchronization inquiry request, and send a scanning synchronization inquiry response to the first device, where the scanning synchronization inquiry response indicates a scanning channel to which the any AP switches last time. The first device is further configured to determine a difference between scanning channels of any two APs based on scanning synchronization inquiry responses of the any two APs in the plurality of APs.

Based on the possible design, the first device may determine the difference between the scanning channels of the any two APs by using the scanning synchronization inquiry response. When the difference is greater than or equal to the channel difference threshold, the first device may send the scanning synchronization message to the plurality of APs, detect the problem of scanning occasion asynchronization in time, and perform global synchronization again in time.

In a possible design, the first AP is further configured to: when determining that the scanning channel of the system is the operating channel of the first AP, send a wake-up indication to the one or more terminal devices.

Based on the possible design, the first AP sends the wake-up indication to a terminal device, so that the terminal device is in a wake-up state when each second AP initiates coordinated scanning measurement. In this case, the terminal device can obtain, in one coordinated scanning measurement process, more measurement requests sent by second APs, and report the measurement result. Further, the first AP can obtain, in one time of coordinated scanning measurement, signal strengths between more second APs and a terminal device associated with the first AP. In this way, the coordinated scanning measurement effect is improved.

In a possible design, the first AP is further configured to send the wake-up indication to the one or more terminal devices in first duration, where the first duration is greater than or equal to scanning duration, and the scanning duration is duration of a scanning channel.

Based on the possible design, each second AP may send a measurement request to a terminal device in the scanning duration. To ensure that the terminal device is in a wake-up state when each second AP sends the measurement request to the terminal device, the first AP may determine the first duration based on the scanning duration. In other words, the first duration may be greater than or equal to the scanning duration. Further, when the first AP sends the wake-up indication to the terminal device in the first duration, it can be ensured that the terminal device can be in the wake-up state when each second AP sends the measurement request to the terminal device in the scanning duration.

In a possible design, the first duration is greater than the scanning duration, a start moment of the first duration is earlier than a start moment of the scanning duration, and an end moment of the first duration is later than an end moment of the scanning duration.

Based on the possible design, to avoid packet collision on an air interface when each second AP sends a measurement request to a terminal device in a case of strict synchronization, each second AP may send the measurement request to the terminal device in a specific time range based on a random backoff mechanism. In addition, to ensure that the terminal device is in a wake-up state when each second AP sends the measurement request to the terminal device, the first AP may determine the first duration based on the scanning duration and the random backoff mechanism. In other words, the start moment of the first duration may be earlier than the start moment of the scanning duration, and the end moment of the first duration may be later than the end moment of the scanning duration.

In a possible design, a difference between the start moment of the first duration and the start moment of the scanning duration is a first threshold, a difference between the end moment of the first duration and the end moment of the scanning duration is a second threshold, and both the first threshold and the second threshold are greater than or equal to a maximum value of random backoff duration of the plurality of second APs.

Based on the possible design, the first duration may be determined based on the random backoff duration, so that a terminal can still be in a wake-up state when each AP executes the backoff mechanism, and the terminal can be prevented from being in the wake-up state for a long period. In this way, power consumption of the terminal is reduced.

In a possible design, the wake-up indication is a beacon frame and/or a data packet, and a delivery traffic indication message DTIM count field of the beacon frame is set to 0, or a DTIM duration field of the beacon frame is set to 1.

Based on the possible design, the first AP may send a normal data packet to a terminal device when there is a service transmission requirement, so that the terminal device is in a wake-up state. If the first AP has no service transmission requirement currently, the first AP may send a beacon frame and/or a null packet to a terminal device, so that the terminal device is in a wake-up state.

In a possible design, the first AP is further configured to: receive a measurement report of a first terminal device, and obtain the measurement result based on the measurement report, where the one or more terminal devices include the first terminal device.

In a possible design, the first AP is further configured to: when the first AP receives no measurement report about a third AP from a second terminal device in second duration, determine that a signal strength between the third AP and the second terminal device is less than a signal strength threshold, where the one or more terminal devices include the second terminal device, and the one or the plurality of second APs include the third AP.

Based on the foregoing two possible designs, when one or a plurality of second APs send a measurement request to a terminal device, signal strengths between some second APs and the terminal device (for example, the first terminal device) may be relatively strong. The terminal device may receive measurement requests sent by the some second APs, and further report the measurement result to the first AP. Alternatively, signal strengths between some second APs (for example, the third AP) and the terminal device (for example, the second terminal device) may be relatively weak. The terminal device may not receive measurement requests sent by the some second APs, and therefore cannot report the measurement result to the first AP. In this case, the first AP may determine that the signal strength between the third AP and the second terminal device is less than the signal strength threshold.

According to a second aspect, this application provides a signal strength measurement method. The method may be performed by a second AP, may be performed by a component (for example, a processor, a chip, or a chip system) of the second AP, or may be implemented by a logic module or software that can implement all or a part of functions of the second AP. The following uses an example in which the method is performed by the second AP. The method may include: The second AP receives a scanning synchronization message, where the scanning synchronization message indicates at least one target scanning channel, and the scanning synchronization message indicates the second AP to switch a scanning channel in a sequence of the at least one target scanning channel. The second AP obtains a coordinated scanning measurement request, where the coordinated scanning measurement request carries an identifier of one or more terminal devices, the coordinated scanning measurement request is used to request the second AP to initiate a measurement request to the one or more terminal devices, and the one or more terminal devices are terminal devices associated with a first AP. When the scanning channel of the second AP is switched to an operating channel of the first AP, the second AP sends the measurement request to the one or more terminal devices.

Based on the second aspect, each second AP may switch, based on the received scanning synchronization message, the scanning channel in the sequence of the at least one target scanning channel indicated by the scanning synchronization message, so that a plurality of second APs may switch to a same scanning channel simultaneously or simultaneously as much as possible, to implement scanning occasion synchronization. In this way, the first AP whose operating channel is the scanning channel can obtain, in one time of coordinated scanning measurement, signal strengths between more second APs and a terminal device associated with the first AP, to improve a coordinated scanning measurement effect. In this way, management policies such as radio frequency resource management and roaming policies are better supported, and communication performance is improved.

In a possible design, that the second AP receives the scanning synchronization message includes: The second AP receives the scanning synchronization message sent by the first AP, where the at least one target scanning channel is the operating channel of the first AP.

Based on the possible design, the first AP may actively send the scanning synchronization message to one or a plurality of second APs based on a detection requirement, where the scanning synchronization message indicates a target scanning channel, and the target scanning channel is the operating channel of the first AP, in other words, the scanning synchronization message indicates the one or the plurality of second APs to switch from a scanning channel to the operating channel of the first AP. After receiving the scanning synchronization message, all the one or the plurality of second APs may switch from the scanning channel to the operating channel of the first AP simultaneously or simultaneously as much as possible, and when receiving the coordinated scanning measurement request sent by the first AP, send, on the operating channel of the first AP, the measurement request to the one or more terminal devices associated with the first AP. In this way, the first AP can obtain, in one time of coordinated scanning measurement, signal strengths between more second APs and the one or more terminal devices associated with the first AP.

In a possible design, the coordinated scanning measurement request is carried in the scanning synchronization message.

Based on the possible design, when the scanning synchronization message is sent by the first AP to the one or the plurality of second APs, the first AP may include the coordinated scanning measurement request in the scanning synchronization message, to reduce signaling overheads. It may be understood that, the first AP may alternatively send the scanning synchronization message and the coordinated scanning measurement request separately. This is not limited.

In a possible design, that the second AP receives the scanning synchronization message includes: The second AP receives the scanning synchronization message sent by a first device.

Based on the possible design, the scanning synchronization message may alternatively be sent by the first device. All the second APs that receive the scanning synchronization message may switch, in the sequence of the at least one target scanning channel indicated by the scanning synchronization message, from scanning channels to a same target scanning channel in the at least one target scanning channel simultaneously or simultaneously as much as possible, to synchronize or to synchronize as much as possible, scanning occasions of the second APs for the same scanning channel.

In a possible design, the second AP switches the scanning channel in the sequence of the at least one target scanning channel.

In a possible design, that the second AP sends the measurement request to the one or more terminal devices includes: The second AP sends the measurement request to the one or more terminal devices in scanning duration.

Based on the possible design, when the second AP switches from the scanning channel to the operating channel of the first AP, the second AP may send, in scanning duration of the scanning channel, a measurement request to a terminal device associated with the first AP, to improve a success rate of sending the measurement request.

In a possible design, the second AP sends a coordinated scanning measurement response to the first AP, where the coordinated scanning measurement response indicates a measurement request record that has been sent by the second AP to the one or more terminal devices.

Based on the possible design, the second AP may alternatively send the coordinated scanning measurement response to the first AP, so that the first AP determines, based on the coordinated scanning measurement response, whether coordinated scanning measurement is successfully performed. Alternatively, the first AP may determine terminal devices to which the second AP sends measurement requests, or the like.

In a possible design, the second AP periodically receives the scanning synchronization message.

In a possible design, the second AP receives a scanning synchronization inquiry request from the first device, where the scanning synchronization inquiry request is used to request to obtain a scanning channel to which the second AP switches last time. The second AP sends a scanning synchronization inquiry response to the first device, where the scanning synchronization inquiry response indicates the scanning channel to which the second AP switches last time.

Based on the possible design, the second AP may send the scanning synchronization inquiry response to the first device in response to the scanning synchronization inquiry request, so that the first device determines a difference between scanning channels of any two APs based on a received scanning synchronization inquiry response of each AP, and further sends the scanning synchronization message to a plurality of APs including the second AP when the difference is greater than or equal to a preset channel difference threshold, to discover a problem of scanning occasion asynchronization in time and perform global synchronization again in time. This can further improve synchronization of scanning channels of APs.

According to a third aspect, this application provides a signal strength measurement method. The method may be performed by a first AP, may be performed by a component (for example, a processor, a chip, or a chip system) of the first AP, or may be implemented by a logic module or software that can implement all or a part of functions of the first AP. The following uses an example in which the method is performed by the first AP. The method may include: The first AP receives a scanning synchronization message, where the scanning synchronization message indicates at least one target scanning channel, and the scanning synchronization message indicates the first AP to switch a scanning channel in a sequence of the at least one target scanning channel. When the scanning channel of the first AP is switched to an operating channel of the first AP, the first AP sends a coordinated scanning measurement request to one or a plurality of second APs, where the coordinated scanning measurement request carries an identifier of one or more terminal devices, the coordinated scanning measurement request is used to request each second AP to initiate a measurement request to the one or more terminal devices, and the one or more terminal devices are terminal devices associated with the first AP. The first AP obtains a measurement result, where the measurement result indicates a signal strength between each of at least one second AP and at least one terminal device, the one or the plurality of second APs include the at least one second AP, and the one or more terminal devices include the at least one terminal device.

Based on the third aspect, the first AP may switch, based on the received scanning synchronization message, the scanning channel in the sequence of the at least one target scanning channel indicated by the scanning synchronization message, so that the first AP and another AP (for example, the one or the plurality of second APs) may switch to a same scanning channel simultaneously or simultaneously as much as possible, to implement scanning occasion synchronization. In this way, the first AP whose operating channel is the scanning channel can obtain, in one time of coordinated scanning measurement, signal strengths between more second APs and a terminal device associated with the first AP, to improve a coordinated scanning measurement effect. In this way, management policies such as radio frequency resource management and roaming policies are better supported, and communication performance is improved.

In a possible design, the first AP switches from the scanning channel of the first AP to a target scanning channel in the at least one target scanning channel in the sequence of the at least one target scanning channel.

In a possible design, the first AP sends first indication information to a first device, where the first indication information indicates a first target scanning channel, the first target scanning channel is the operating channel of the first AP, and the at least one target scanning channel includes the first target scanning channel.

Based on the possible design, the first indication information is sent to the first device, so that the first device can generate and send the scanning synchronization message based on the first indication information. In this way, each AP that receives the scanning synchronization message switches from the scanning channel to the operating channel of the first AP simultaneously or simultaneously as much as possible.

In a possible design, the first AP periodically receives the scanning synchronization message.

In a possible design, the first AP is further configured to: receive a scanning synchronization inquiry request, and send a scanning synchronization inquiry response, where the scanning synchronization inquiry response indicates a scanning channel to which the first AP switches last time.

Based on the possible design, the first AP may send the scanning synchronization inquiry response to the first device in response to the scanning synchronization inquiry request, so that the first device determines a difference between scanning channels of any two APs based on the received scanning synchronization inquiry response of each AP, and further sends the scanning synchronization message to a plurality of APs including the first AP when the difference is greater than or equal to a channel difference threshold, to discover a problem of scanning occasion asynchronization in time, and perform global synchronization again in time.

In a possible design, when the scanning channel of the first AP is switched to the operating channel of the first AP, the first AP sends a wake-up indication to the one or more terminal devices.

Based on the possible design, the first AP sends the wake-up indication to a terminal device, so that the terminal device is in a wake-up state when each second AP initiates coordinated scanning measurement. In this case, the terminal device can obtain, in one coordinated scanning measurement process, more measurement requests sent by second APs, and report a measurement result. Further, the first AP can obtain, in one time of coordinated scanning measurement, signal strengths between more second APs and a terminal device associated with the first AP. In this way, the coordinated scanning measurement effect is improved.

In a possible design, the first AP sends the wake-up indication to the one or more terminal devices in first duration, where the first duration is greater than or equal to scanning duration, and the scanning duration is duration of a scanning channel.

Based on the possible design, each second AP may send a measurement request to a terminal device in the scanning duration. To ensure that the terminal device is in a wake-up state when each second AP sends the measurement request to the terminal device, the first AP may determine the first duration based on the scanning duration. In other words, the first duration may be greater than or equal to the scanning duration. Further, when the first AP sends the wake-up indication to the terminal device in the first duration, it can be ensured that the terminal device can be in the wake-up state when each second AP sends the measurement request to the terminal device in the scanning duration.

In a possible design, the first duration is greater than the scanning duration, a start moment of the first duration is earlier than a start moment of the scanning duration, and an end moment of the first duration is later than an end moment of the scanning duration.

Based on the possible design, to avoid packet collision on an air interface when each second AP sends a measurement request to a terminal device in a case of strict synchronization, each second AP may send the measurement request to the terminal device in a specific time range based on a random backoff mechanism. In addition, to ensure that the terminal device is in the wake-up state when each second AP sends the measurement request to the terminal device, the first AP may determine the first duration based on the scanning duration and the random backoff mechanism. In other words, the start moment of the first duration may be earlier than the start moment of the scanning duration, and the end moment of the first duration may be later than the end moment of the scanning duration.

In a possible design, a difference between the start moment of the first duration and the start moment of the scanning duration is a first threshold, a difference between the end moment of the first duration and the end moment of the scanning duration is a second threshold, and both the first threshold and the second threshold are greater than or equal to a maximum value of random backoff duration of the plurality of second APs.

Based on the possible design, the first duration may be determined based on the random backoff duration, to provide a feasible solution for designing the first duration.

In a possible design, the first AP receives a measurement report of a first terminal device, and obtains the measurement result based on the measurement report, where the one or more terminal devices include the first terminal device.

In a possible design, when the first AP receives no measurement report about a third AP from a second terminal device in second duration, the first AP determines that a signal strength between the third AP and the second terminal device is less than a signal strength threshold, where the one or more terminal devices include the second terminal device, and the one or the plurality of second APs include the third AP.

Based on the foregoing two possible designs, when one or a plurality of second APs send a measurement request to a terminal device, signal strengths between some second APs and the terminal device (for example, the first terminal device) may be relatively strong. The terminal device may receive measurement requests sent by the some second APs, and further report the measurement result to the first AP. Alternatively, signal strengths between some second APs (for example, the third AP) and the terminal device (for example, the second terminal device) may be relatively weak. The terminal device may not receive measurement requests sent by the some second APs, and therefore cannot report the measurement result to the first AP. In this case, the first AP may determine that the signal strength between the third AP and the second terminal device is less than the signal strength threshold.

According to a fourth aspect, this application provides a signal strength measurement method. The method may be performed by a first AP, may be performed by a component (for example, a processor, a chip, or a chip system) of the first AP, or may be implemented by a logic module or software that can implement all or a part of functions of the first AP. The following uses an example in which the method is performed by the first AP. The method may include: The first AP sends a scanning synchronization message to one or a plurality of second APs, where the scanning synchronization message indicates at least one target scanning channel, and the scanning synchronization message indicates each first AP to switch a scanning channel in a sequence of the at least one target scanning channel. The first AP sends a coordinated scanning measurement request to the one or the plurality of second APs, where the coordinated scanning measurement request carries an identifier of one or more terminal devices, the coordinated scanning measurement request is used to request each second AP to initiate a measurement request to the one or more terminal devices, and the one or more terminal devices are terminal devices associated with the first AP. The first AP obtains a measurement result, where the measurement result indicates a signal strength between each of at least one second AP and at least one terminal device, the one or the plurality of second APs include the at least one second AP, and the one or more terminal devices include the at least one terminal device.

Based on the fourth aspect, the first AP may actively send the scanning synchronization message to the one or the plurality of second APs based on a detection requirement, where the scanning synchronization message indicates a target scanning channel, and the target scanning channel is an operating channel of the first AP, in other words, the scanning synchronization message indicates the one or the plurality of second APs to switch from a scanning channel to the operating channel of the first AP. After receiving the scanning synchronization message, all the one or the plurality of second APs may switch from the scanning channel to the operating channel of the first AP simultaneously or simultaneously as much as possible, and when receiving the coordinated scanning measurement request sent by the first AP, send, on the operating channel of the first AP, the measurement request to the one or more terminal devices associated with the first AP. In this way, the first AP can obtain, in one time of coordinated scanning measurement, signal strengths between more second APs and the one or more terminal devices associated with the first AP.

In a possible design, the coordinated scanning measurement request is carried in the scanning synchronization message.

Based on the possible design, when the scanning synchronization message is sent by the first AP to the one or the plurality of second APs, the first AP may include the coordinated scanning measurement request in the scanning synchronization message, to reduce signaling overheads. It may be understood that, the first AP may alternatively send the scanning synchronization message and the coordinated scanning measurement request separately. This is not limited.

In a possible design, when the scanning channel of the first AP is switched to the operating channel of the first AP, the first AP sends a wake-up indication to the one or more terminal devices.

In a possible design, the first AP sends the wake-up indication to the one or more terminal devices in first duration, where the first duration is greater than or equal to scanning duration, and the scanning duration is duration of a scanning channel.

In a possible design, the first duration is greater than the scanning duration, a start moment of the first duration is earlier than a start moment of the scanning duration, and an end moment of the first duration is later than an end moment of the scanning duration.

In a possible design, a difference between the start moment of the first duration and the start moment of the scanning duration is a first threshold, a difference between the end moment of the first duration and the end moment of the scanning duration is a second threshold, and both the first threshold and the second threshold are greater than or equal to a maximum value of random backoff duration of the plurality of second APs.

In a possible design, the first AP receives a measurement report of a first terminal device, and obtains the measurement result based on the measurement report, where the one or more terminal devices include the first terminal device.

In a possible design, when the first AP receives no measurement report about a third AP from a second terminal device in second duration, the first AP determines that a signal strength between the third AP and the second terminal device is less than a signal strength threshold, where the one or more terminal devices include the second terminal device, and the one or the plurality of second APs include the third A.

For technical effects that can be brought by the foregoing six possible designs, refer to technical effects that can be brought by related designs in the third aspect. Details are not described again.

According to a fifth aspect, this application provides a signal strength measurement method. The method may be performed by a first terminal device, may be performed by a component (for example, a processor, a chip, or a chip system) of the first terminal device, or may be implemented by a logic module or software that can implement all or a part of functions of the first terminal device. The following uses an example in which the method is performed by the first terminal device. The method may include: receiving a wake-up indication from a first AP in first duration, where the first terminal device is a terminal device associated with the first AP, the first duration is greater than or equal to scanning duration, and the scanning duration is duration of a scanning channel; receiving one or more measurement requests in the first duration; and sending a measurement report to the first AP based on the one or more measurement requests, where the measurement report indicates a signal strength between the first terminal device and corresponding one or a plurality of second APs that send the one or more measurement requests.

Based on the fifth aspect, the first AP sends the wake-up indication to a terminal device, so that the terminal device is in a wake-up state when each second AP initiates coordinated scanning measurement. In this case, the terminal device can obtain, in one coordinated scanning measurement process, more measurement requests sent by second APs, and report a measurement result. Further, the first AP can obtain, in one time of coordinated scanning measurement, signal strengths between more second APs and a terminal device associated with the first AP. In this way, a coordinated scanning measurement effect is improved.

In a possible design, the first duration is greater than the scanning duration, a start moment of the first duration is earlier than a start moment of the scanning duration, and an end moment of the first duration is later than an end moment of the scanning duration.

In a possible design, a difference between the start moment of the first duration and the start moment of the scanning duration is a first threshold, a difference between the end moment of the first duration and the end moment of the scanning duration is a second threshold, and both the first threshold and the second threshold are greater than or equal to a maximum value of random backoff duration of the plurality of second APs.

For technical effects that can be brought by the foregoing two possible designs, refer to technical effects that can be brought by related designs in the third aspect. Details are not described again.

According to a sixth aspect, this application provides a communication apparatus. The communication apparatus may be used in the second AP in the second aspect, to implement functions performed by the second AP. The communication apparatus may be the second AP, or may be a chip, a chip system, a system on chip, or the like of the second AP. The communication apparatus may perform the functions performed by the second AP by hardware, or may be implemented by hardware executing corresponding software. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

The transceiver module may be configured to receive a scanning synchronization message, where the scanning synchronization message indicates at least one target scanning channel, and the scanning synchronization message indicates the second AP to switch a scanning channel in a sequence of the at least one target scanning channel. The transceiver module may be further configured to obtain a coordinated scanning measurement request, where the coordinated scanning measurement request carries an identifier of one or more terminal devices, the coordinated scanning measurement request is used to request the second AP to initiate a measurement request to the one or more terminal devices, and the one or more terminal devices are terminal devices associated with a first AP. The transceiver module may be further configured to: when the processing module determines that the scanning channel of the second AP is switched to an operating channel of the first AP, send the measurement request to the one or more terminal devices.

Optionally, the transceiver module and the processing module of the communication apparatus according to the sixth aspect may further perform corresponding functions in any possible design of the second aspect. For details, refer to the detailed descriptions in the method examples. For beneficial effects that can be achieved, refer to the foregoing related content.

According to a seventh aspect, this application provides a communication apparatus. The communication apparatus may be used in the first AP in the third aspect, to implement functions performed by the first AP. The communication apparatus may be the first AP, or may be a chip, a chip system, a system on chip, or the like of the first AP. The communication apparatus may perform the functions performed by the first AP by hardware, or may be implemented by hardware executing corresponding software. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

The transceiver module may be configured to receive a scanning synchronization message, where the scanning synchronization message indicates at least one target scanning channel, and the scanning synchronization message indicates the first AP to switch a scanning channel in a sequence of the at least one target scanning channel. The transceiver module may be further configured to: when the processing module determines that the scanning channel of the first AP is switched to an operating channel of the first AP, send a coordinated scanning measurement request to one or a plurality of second APs, where the coordinated scanning measurement request carries an identifier of one or more terminal devices, the coordinated scanning measurement request is used to request each second AP to initiate a measurement request to the one or more terminal devices, and the one or more terminal devices are terminal devices associated with the first AP. The transceiver module and the processing module may be further configured to obtain a measurement result, where the measurement result indicates a signal strength between each of at least one second AP and at least one terminal device, the one or the plurality of second APs include the at least one second AP, and the one or more terminal devices include the at least one terminal device.

Optionally, the transceiver module and the processing module of the communication apparatus according to the seventh aspect may further perform corresponding functions in any possible design of the third aspect. For details, refer to the detailed descriptions in the method examples. For beneficial effects that can be achieved, refer to the foregoing related content.

According to an eighth aspect, this application provides a communication apparatus. This application provides a communication apparatus. The communication apparatus may be used in the first AP in the fourth aspect, to implement functions performed by the first AP. The communication apparatus may be the first AP, or may be a chip, a chip system, a system on chip, or the like of the first AP. The communication apparatus may perform the functions performed by the first AP by hardware, or may be implemented by hardware executing corresponding software. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

The transceiver module may be configured to send a scanning synchronization message to one or a plurality of second APs, where the scanning synchronization message indicates at least one target scanning channel, and the scanning synchronization message indicates each first AP to switch a scanning channel in a sequence of the at least one target scanning channel. The transceiver module may be further configured to send a coordinated scanning measurement request to the one or the plurality of second APs, where the coordinated scanning measurement request carries an identifier of one or more terminal devices, the coordinated scanning measurement request is used to request each second AP to initiate a measurement request to the one or more terminal devices, and the one or more terminal devices are terminal devices associated with the first AP. The transceiver module and the processing module may be further configured to obtain a measurement result, where the measurement result indicates a signal strength between each of at least one second AP and at least one terminal device, the one or the plurality of second APs include the at least one second AP, and the one or more terminal devices include the at least one terminal device.

Optionally, the transceiver module and the processing module of the communication apparatus according to the eighth aspect may further perform corresponding functions in any possible design of the fourth aspect. For details, refer to the detailed descriptions in the method examples. For beneficial effects that can be achieved, refer to the foregoing related content.

According to a ninth aspect, this application provides a communication apparatus. This application provides a communication apparatus. The communication apparatus may be used in the first terminal device in the fifth aspect, to implement functions performed by the first terminal device. The communication apparatus may be the first terminal device, or may be a chip, a chip system, a system on chip, or the like of the first terminal device. The communication apparatus may perform the functions performed by the first terminal device by hardware, or may be implemented by hardware executing corresponding software. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

The transceiver module may be configured to receive a wake-up indication from a first AP in first duration, where the first terminal device is a terminal device associated with the first AP, the first duration is greater than or equal to scanning duration, and the scanning duration is duration of a scanning channel. The transceiver module may be further configured to: receive one or more measurement requests in the first duration, and send a measurement report to the first AP based on the one or more measurement requests, where the measurement report indicates a signal strength between the first terminal device and corresponding one or a plurality of second APs that send the one or more measurement requests.

Optionally, the transceiver module and the processing module of the communication apparatus according to the eighth aspect may further perform corresponding functions in any possible design of the fifth aspect. For details, refer to the detailed descriptions in the method examples. For beneficial effects that can be achieved, refer to the foregoing related content.

According to a tenth aspect, this application provides a communication apparatus. The communication apparatus includes one or more processors. The one or more processors are configured to run a computer program or instructions. When the one or more processors execute the computer instructions or the instructions, the communication apparatus performs the signal strength measurement method according to any one of the second aspect or the possible designs of the second aspect, performs the signal strength measurement method according to any one of the third aspect or the possible designs of the third aspect, performs the signal strength measurement method according to any one of the fourth aspect or the possible designs of the fourth aspect, or performs the signal strength measurement method according to any one of the fifth aspect or the possible designs of the fifth aspect.

In a possible design, the communication apparatus further includes one or more memories, the one or more memories are coupled to the one or more processors, and the one or more memories are configured to store the foregoing computer program or the instructions. In a possible implementation, the memory is located outside the communication apparatus. In another possible implementation, the memory is located inside the communication apparatus. In embodiments of this application, the processor and the memory may alternatively be integrated into one component. In other words, the processor and the memory may alternatively be integrated together. In a possible implementation, the communication apparatus further includes a transceiver. The transceiver is configured to: receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to an eleventh aspect, this application provides a communication apparatus. The communication apparatus includes an input/output interface and a logic circuit. The input/output interface is configured to input and/or output information. The logic circuit is configured to: perform the signal strength measurement method according to any one of the second aspect or the possible designs of the second aspect, perform the signal strength measurement method according to any one of the third aspect or the possible designs of the third aspect, perform the signal strength measurement method according to any one of the fourth aspect or the possible designs of the fourth aspect, or perform the signal strength measurement method according to any one of the fifth aspect or the possible designs of the fifth aspect; and perform processing and/or generate information based on information.

According to a twelfth aspect, this application provides a computer-readable storage medium. The computer-readable storage medium stores computer instructions or a program. When the computer instructions or the program is run on a computer, the signal strength measurement method according to any one of the second aspect or the possible designs of the second aspect is performed, the signal strength measurement method according to any one of the third aspect or the possible designs of the third aspect is performed, the signal strength measurement method according to any one of the fourth aspect or the possible designs of the fourth aspect is performed, or the signal strength measurement method according to any one of the fifth aspect or the possible designs of the fifth aspect is performed.

According to a thirteenth aspect, this application provides a computer program product including computer instructions. When the computer program product runs on a computer, the signal strength measurement method according to any one of the second aspect or the possible designs of the second aspect is performed, the signal strength measurement method according to any one of the third aspect or the possible designs of the third aspect is performed, the signal strength measurement method according to any one of the fourth aspect or the possible designs of the fourth aspect is performed, or the signal strength measurement method according to any one of the fifth aspect or the possible designs of the fifth aspect is performed.

According to a fourteenth aspect, this application provides a computer program. When the computer program is run on a computer, the signal strength measurement method according to any one of the second aspect or the possible designs of the second aspect is performed, the signal strength measurement method according to any one of the third aspect or the possible designs of the third aspect is performed, the signal strength measurement method according to any one of the fourth aspect or the possible designs of the fourth aspect is performed, or the signal strength measurement method according to any one of the fifth aspect or the possible designs of the fifth aspect is performed.

According to a fifteenth aspect, this application provides a chip, including a processor. The processor is coupled to a memory. The memory is configured to store a program or instructions. When the program or the instructions are executed by the processor, the chip is enabled to perform the signal strength measurement method according to any one of the second aspect or the possible designs of the second aspect, perform the signal strength measurement method according to any one of the third aspect or the possible designs of the third aspect, perform the signal strength measurement method according to any one of the fourth aspect or the possible designs of the fourth aspect, or perform the signal strength measurement method according to any one of the fifth aspect or the possible designs of the fifth aspect.

For technical effects brought by any design of the tenth aspect to the fifteenth aspect, refer to the technical effects brought by any one of the first aspect or the possible designs of the first aspect, refer to the technical effects brought by any one of the second aspect or the possible designs of the second aspect, refer to the technical effects brought by any one of the third aspect or the possible designs of the third aspect, refer to the technical effects brought by any one of the fourth aspect or the possible designs of the fourth aspect, or refer to the technical effects brought by any one of the fifth aspect or the possible designs of the fifth aspect. Details are not described again.

### BRIEF DESCRIPTION OF DRAWINGS

FIG. 1 is a diagram of a signal strength measurement method according to an embodiment of this application;
FIG. 2 is a diagram of a communication system according to an embodiment of this application;
FIG. 3 is a diagram of a structure of a communication apparatus according to an embodiment of this application;
FIG. 4 is a schematic flowchart of a signal strength measurement method according to an embodiment of this application;
FIG. 5 is a diagram of a sequence of at least one target scanning channel according to an embodiment of this application;
FIG. 6 is a diagram of sending a measurement request to a terminal device according to an embodiment of this application;
FIG. 7 is a diagram of sending a measurement request to a terminal device according to an embodiment of this application;
FIG. 8 is a schematic flowchart of a signal strength measurement method according to an embodiment of this application;
FIG. 9 is a diagram of a beacon frame according to an embodiment of this application;
FIG. 10 is a diagram of a random backoff mechanism according to an embodiment of this application;
FIG. 11 is a diagram of first duration according to an embodiment of this application;
FIG. 12 is a schematic flowchart of sending a wake-up indication according to an embodiment of this application;
FIG. 13 is a diagram of a coordinated scanning measurement mechanism according to an embodiment of this application;
FIG. 14 is a diagram of verification result comparison according to an embodiment of this application;
FIG. 15 is a diagram of verification result comparison according to an embodiment of this application;
FIG. 16 is a diagram of a structure of a communication apparatus according to an embodiment of this application; and
FIG. 17 is a diagram of a structure of a communication apparatus according to an embodiment of this application.

### DESCRIPTION OF EMBODIMENTS

A WLAN communication system is a communication system operating based on 802.11 series standards. The related standards start from the 802.11a/b/g standard, and have been developed for a plurality of generations, including the 802.11n standard, the 802.11ac standard, the 802.11ax standard, the 802.11be standard, a next-generation 802.11 standard, and the like.

With rapid development of the WLAN communication system, deployment of access points (access points, APs) of an enterprise-level WLAN networking tends to be dense, to meet requirements of indoor coverage services such as a campus network, an enterprise campus, an automatic production workshop, and a hospital.

The WLAN system may implement centralized management of APs. A centralized management policy may include a radio resource management (radio resource management, RRM) policy, a roaming policy, and the like. Implementation effects of radio resource management and roaming policies depend on a sensed downlink signal strength.

For example, when an AP makes a roaming decision for a terminal device associated with the AP (for example, whether the terminal device needs to be guided to roam, or a destination AP to which the terminal device needs to be guided to be roamed), the AP needs to obtain signal strengths between the terminal device and as many neighboring APs as possible. The AP herein may be referred to as an AP associated with the terminal device. In other words, the associated AP is an AP that establishes a connection relationship with the terminal device, and the terminal device goes online on the associated AP, and connects to a network via the associated AP. Correspondingly, the terminal device may be referred to as a terminal device associated with the AP.

For another example, when an associated AP detects that a downlink signal of a terminal device associated with the associated AP is weak, the associated AP may determine, based on strengths of downlink signals between the terminal device and as many neighboring APs as possible, whether transmit power of the associated AP needs to be adjusted.

In a possible implementation, the associated AP may send a coordinated scanning measurement request to a neighboring AP, to expect the neighboring AP to initiate measurement on a terminal device associated with the associated AP. In this way, a signal strength between the neighboring AP and the terminal device associated with the associated AP is obtained. The neighboring AP may initiate, based on the coordinated scanning measurement request, an active and deceptive fake measurement request to the terminal device when a scanning channel is switched to an operating channel of the associated AP. After obtaining the measurement request of the neighboring AP, the terminal device considers that the associated AP initiates the measurement request, and therefore sends a measurement result (where the measurement result is actually a measurement result of the neighboring AP, but not a measurement result of the associated AP) to the associated AP. Based on this, the associated AP may obtain a strength of a downlink signal from the neighboring AP to the terminal device.

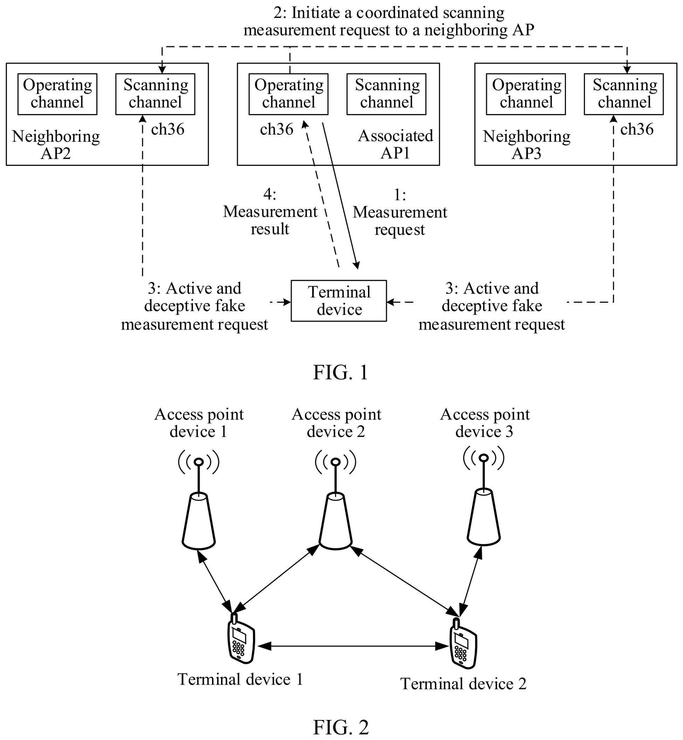

For example, as shown in FIG. 1, an example in which an operating channel of an associated AP is a channel (channel, ch) 36 is used. The associated AP may send a coordinated scanning measurement request to a neighboring AP. When a scanning channel is switched to ch36, the neighboring AP may initiate an active and deceptive fake measurement request to a terminal device. The associated AP may also send a measurement request to the terminal device. The terminal device performs measurement based on the received measurement request, and sends measurement results (for example, including a measurement result of an associated AP1, a measurement result of a neighboring AP2, and a measurement result of a neighboring AP3) to the associated AP.

For the coordinated scanning measurement method shown in FIG. 1, if the neighboring AP may use an independent radio frequency to specially perform coordinated scanning measurement, a better coordinated scanning measurement result can be achieved. For example, three radio frequency APs in which two APs operates at 5 GHz and one AP operates at 2.4 GHz are used as an example. The three radio frequency APs may use one 5 GHz radio frequency to specially perform coordinated scanning measurement. In one coordinated scanning measurement process, the associated AP can obtain measurement results of five or six neighboring APs.

If radio frequency resources of a neighboring AP are limited, the neighboring AP cannot use an independent radio frequency to perform coordinated scanning measurement. In this case, the neighboring AP may switch to each scanning channel at a gap of an operating channel (for example, if a periodicity for the operating channel is 10s, the neighboring AP may switch to a scanning channel every time after operating on the operating channel for 10s, and after one time of scanning is completed, then switch to the operating channel for operating). When the scanning channel of the neighboring AP is switched to the operating channel of the associated AP, the neighboring AP may perform signal strength measurement on the operating channel for a terminal device associated with the associated AP. However, start operating time of each neighboring AP in the WLAN system may vary or some neighboring APs do not perform periodic scanning channel switching strictly based on duration of the operating channel due to special event processing. Various reasons may cause the following phenomenon: When the associated AP expects to obtain a signal strength between each neighboring AP and the terminal device associated with the associated AP, scanning channels of some neighboring APs are just switched to the operating channel of the associated AP, and scanning channels of some neighboring APs need to wait for a long period to switch to the operating channel of the associated AP.

For example, the associated AP operates on ch36, a current scanning channel of a neighboring AP1 is ch36, a current scanning channel of the neighboring AP2 is ch44, a current scanning channel of the neighboring AP3 is ch48, a current scanning channel of a neighboring AP4 is ch149, and a current scanning channel of a neighboring AP5 is ch36. In this case, scanning channels of the neighboring AP2 to the neighboring AP4 are different from the operating channel of the associated AP, and the terminal device associated with the associated AP can receive only a packet/frame sent based on the operating channel of the associated AP. Therefore, the neighboring AP2 to the neighboring AP4 cannot initiate measurement on the terminal device associated with the associated AP, and the associated AP can obtain only signal strengths between the neighboring AP 1 and the neighboring AP5 and the terminal device associated with the associated AP. In other words, in this implementation, the associated AP can obtain, in one time of coordinated scanning measurement, only signal strengths between a small quantity of neighboring APs and the terminal device associated with the associated AP, or even cannot obtain a signal strength between a neighboring AP and the terminal device associated with the associated AP.

In view of this, embodiments of this application provide a signal strength measurement system and method, and a related apparatus. In the method, a scanning synchronization message is sent to a plurality of APs in a WLAN system, to indicate the plurality of APs to switch, after receiving the scanning synchronization message, a scanning channel in a sequence of at least one target scanning channel indicated by the scanning synchronization message, so that the plurality of APs can switch to a same scanning channel simultaneously or simultaneously as much as possible. In this way, an associated AP whose operating channel is the scanning channel can obtain, in one time of coordinated scanning measurement, signal strengths between a plurality of neighboring APs and a terminal device associated with the associated AP.

Optionally, the scanning synchronization message may be sent by a first device to the plurality of APs in the WLAN system. The first device is, for example, a control device (for example, an access controller (access controller, AC)) in the WLAN system, or the first device is, for another example, an AP in the WLAN system. For example, the AC sends the scanning synchronization message to the plurality of APs in the WLAN system, where the scanning synchronization message indicates three target scanning channels, the three target scanning channels are respectively ch36, ch44, and ch48, the plurality of APs include an AP1 to an AP5, and operating channels of the AP1 to the AP5 are respectively ch36, ch149, ch44, ch48, and ch52. After receiving the scanning synchronization message, the five APs switch scanning channels in a sequence of the three target scanning channels indicated by the scanning synchronization message. To be specific, the AP1 to the AP5 first switch from the scanning channels to ch36, switch from the scanning channels to ch44 when switching the scanning channels for a next time, switch from the scanning channels to ch48 when switching the scanning channels for a further next time, and switch from the scanning channels to ch36 when switching the scanning channels after switching to ch48. When a scanning channel of the WLAN system is an operating channel of an AP, the AP may send a coordinated scanning measurement request to another AP. The coordinated scanning measurement request may carry an identifier of one or more terminal devices associated with the AP, to request the another AP to perform measurement on the one or more associated terminal devices.

For example, when determining, based on the scanning synchronization message, that the scanning channel of the WLAN system is ch36, the AP1 whose operating channel is ch36 sends the coordinated scanning measurement request to the AP2 to the AP5. The coordinated scanning measurement request carries an identifier of a terminal device 1 associated with the AP1. The AP2 to the AP5 send measurement requests to the terminal device 1. In this way, the AP1 may obtain signal strengths between the terminal device 1 and other four APs (the AP2 to the AP5) in one coordinated scanning measurement process.

For another example, in the sequence (ch36, ch44, and ch48) of the target scanning channels in the scanning synchronization message, the AP1 to the AP5 switch from the scanning channels to ch44 when switching the scanning channels for a next time. In this case, the AP3 whose operating channel is ch44 may send a coordinated scanning measurement request to the AP1, the AP2, the AP4, and the AP5, where the coordinated scanning measurement request carries identifiers of a terminal device 2 and a terminal device 3 associated with the AP3. The AP1, the AP2, the AP4, and the AP5 send measurement requests to the terminal device 2 and the terminal device 3. In this way, the AP3 may obtain signal strengths between the terminal device 2 and the terminal device 3 and the other four APs (the AP1, the AP2, the AP4, and the AP5) in one coordinated scanning measurement process.

Optionally, the scanning synchronization message may be sent by an AP in the plurality of APs to another AP in the plurality of APs. For example, the plurality of APs include the AP1 to the AP5. The AP1 may actively send the scanning synchronization message to the AP2 to the AP5 based on a detection requirement. The scanning synchronization message indicates a target scanning channel, and the target scanning channel is the operating channel of the AP1. In other words, the AP1 indicates, by sending the scanning synchronization message, the AP2 to the AP5 to switch from scanning channels to the operating channel of the AP1. Then, the AP2 to the AP5 may simultaneously initiate measurement on a terminal device associated with the AP1 on the operating channel of the AP1. In this way, the AP1 may obtain, in one time of coordinated scanning measurement, signal strengths between the plurality of APs and the terminal device associated with the AP1. The AP1 may include, in the scanning synchronization message, an identifier of the terminal device (for example, the terminal device 1) associated with the AP1, to indicate the AP2 to the AP5 to initiate measurement on the terminal device 1 when the AP2 to the AP5 switch from scanning channels to the operating channel of the AP1. Alternatively, the AP1 may first send the scanning synchronization message, and then send the coordinated scanning measurement request to the AP2 to the AP5. The coordinated scanning measurement request carries an identifier of the terminal device (for example, the terminal device 1) associated with the AP1, to indicate the AP2 to the AP5 to initiate measurement on the terminal device 1 when the AP2 to the AP5 switch from scanning channels to the operating channel of the AP1.

The AP1 may determine the detection requirement based on an implementation requirement. For example, when the AP1 detects that a signal of the terminal device 1 is weak, and needs to determine whether to guide the terminal device 1 to roam, or determine a destination AP to which the terminal device 1 roams, the AP1 determines the detection requirement.

In the foregoing described coordinated scanning measurement process, each AP indicating an identifier of a terminal device requests another AP to measure a signal strength between the another AP and the terminal device. Correspondingly, in one coordinated scanning measurement process, the AP indicating the identifier of the terminal device is an AP associated with the terminal device. Optionally, in one coordinated scanning measurement process, the associated AP may further send a wake-up indication to the terminal device, so that the terminal device is in a non-sleep state in the coordinated scanning measurement process. This avoids a phenomenon that measurement results cannot be fed back because some terminal devices in a sleep state cannot receive measurement requests, and may further improve a quantity of measurement results obtained by the associated AP or accuracy of the measurement results.

The following describes implementations of embodiments of this application in detail with reference to the accompanying drawings in this specification.

FIG. 2 is a diagram of a communication system according to an embodiment of this application. The communication system may be a system using the 802.11 standard. For example, the 802.11 standard includes but is not limited to the 802.11ax standard, the 802.1be standard, a next-generation 802.11 standard, or the like. This is not limited.

As shown in FIG. 2, the communication system may include a plurality of access point devices and one or more terminal devices (or may be referred to as station devices).

The access point device may be an AP, or may be a chip or a processing system installed in the AP. The terminal device may be a station (station, STA), or may be a chip or a processing system installed in the STA, or the like. This is not limited.

The access point device may be an apparatus having a wireless communication function, supports communication by using a WLAN protocol, and has a function of communicating with another device (for example, a terminal device or another access point device) in a WLAN network. The apparatus having the wireless communication function may be an entire device, or may be a chip, a processing system, or the like installed in the entire device. The device in which the chip or the processing system is installed may implement a method and a function in embodiments of this application under control of the chip or the processing system. The access point device in embodiments of this application is an apparatus that provides a service for a terminal device, and may support a plurality of 802.11 series protocols such as the 802.11a/b/g standard, the 802.11n standard, the 802.11 ac standard, the 802.11 ax standard, the 802.11 be standard, or a next-generation 802.11 standard.

For example, the access point device may be a communication entity like a communication server, a router, a switch, a bridge, a computer, or a mobile phone. The access point device may alternatively be a macro base station, a micro base station, a relay station, or the like in various forms. The access point device may alternatively be a chip and a processing system in these devices in various forms. The access point device may alternatively be a network device with a wireless fidelity (wireless fidelity, Wi-Fi) chip. The access point device may alternatively be an access point for a mobile user to enter a wired network, and is mainly deployed in a home, inside a building, and inside a park. A typical coverage radius ranges from dozens of meters to hundreds of meters. It is clear that the access point device may alternatively be deployed outdoors. The access point device is equivalent to a bridge that connects a wired network and a wireless network. A main function of the access point device is to connect various wireless network clients together and then connect the wireless network to an Ethernet.

The terminal device may be an apparatus having a wireless communication function, supports communication by using the WLAN protocol, and has a capability of communicating with another terminal device or an access point device in the WLAN network. The apparatus having the wireless communication function may be an entire device, or may be a chip, a processing system, or the like installed in the entire device. The device in which the chip or the processing system is installed may implement a method and a function in embodiments of this application under control of the chip or the processing system, and may support a plurality of 802.11 series protocols such as the 802.11a/b/g standard, the 802.11n/g standard, the 802.11ac standard, the 802.11ax standard, the 802.11be standard, or a next-generation 802.11 standard.

For example, the terminal device may be user equipment that can be connected to an internet, such as a communication server, a router, a switch, a bridge, a computer, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), a mobile phone, a set-top box, a smart television, or a smart wearable device, an internet of things node in an internet of things, an in-vehicle communication apparatus in an internet of vehicles, an entertainment device, a game device or system, a global positioning system device, or the like. The terminal device may alternatively be a chip and a processing system in the foregoing terminal devices. The terminal device may alternatively be a wireless communication chip, a wireless sensor, or a wireless communication terminal.

Optionally, the communication system may further include one or more access control devices, and each access control device may manage one or more access point devices. The access control device may be an AC, or may be a chip or a processing system installed in the AC. The access control device may be an apparatus having a wireless or wired communication function, supports communication by using the WLAN protocol, and has a function of communicating with another device (for example, an access point device) in the WLAN network. The apparatus having the wireless communication function may be an entire device, or may be a chip, a processing system, or the like installed in the entire device. The device in which the chip or the processing system is installed may implement a method and a function in embodiments of this application under control of the chip or the processing system. The access control device in embodiments of this application is an apparatus that provides a service for one or more access point devices, and may support a plurality of 802.11 series protocols such as the 802.11a/b/g standard, the 802.11n standard, the 802.11ac standard, the 802.11ax standard, the 802.11be standard, or a next-generation 802.11 standard.

Based on the foregoing descriptions of the communication system, access point devices may be classified into an associated access point device and a neighboring access point device based on a connection between the terminal device and the access point device.

The associated access point device may be responsible for downlink signal measurement of the terminal device, and may further initiate a coordinated scanning measurement request to the neighboring access point device. The neighboring access point device may be responsible for responding to the coordinated scanning measurement request initiated by the associated access point device, switching to a specified scanning channel, and initiating, on the scanning channel, a fake downlink signal measurement request to a terminal device associated with the associated access point device.

The access control device may be responsible for managing all APs in a centralized manner to perform global scanning occasion synchronization, or the AC specifies an AP as a central AP (leader AP) to manage all the APs to perform the global scanning occasion synchronization.

It should be noted that the access point device, the terminal device, and the access control device in embodiments of this application may be one or more chips, or may be a system on chip (system on chip, SoC), or the like. FIG. 2 is merely an example accompany drawing, and a quantity of devices included in FIG. 2 is not limited. In addition, in addition to the device shown in FIG. 2, the communication system may further include another device, for example, may further include a wireless backhaul device. Names of devices and links in FIG. 2 are not limited. In addition to the names shown in FIG. 2, the devices and the links may alternatively have other names. This is not limited.

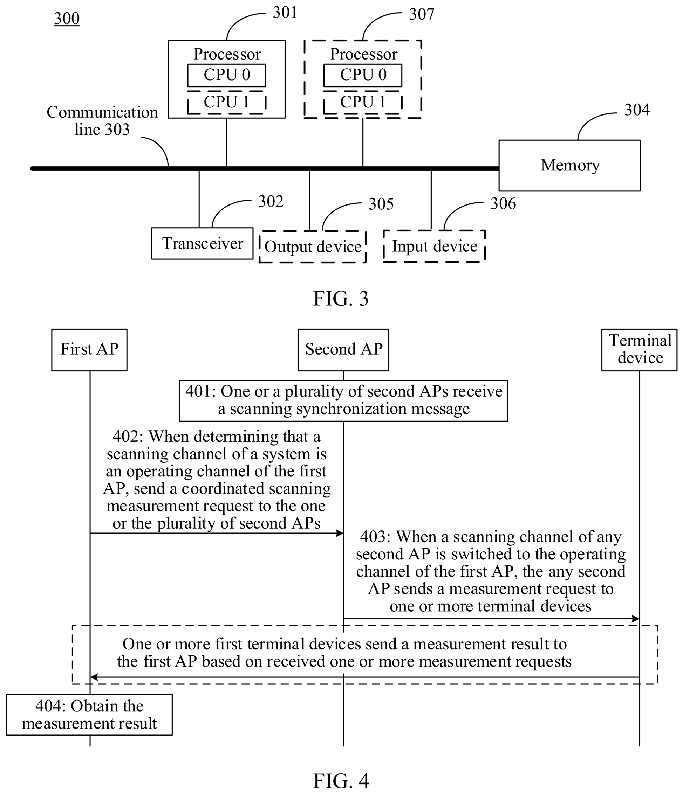

During specific implementation, the access point device, the terminal device, and the access control device shown in FIG. 2 may use a composition structure shown in FIG. 3, or include a component shown in FIG. 3. FIG. 3 is a diagram of a structure of a communication apparatus 300 according to an embodiment of this application. The communication apparatus 300 may be an access point device or a chip or a system on chip in the access point device; may be a terminal device or a chip or a system on chip in the terminal device; or may be an access control device or a chip or a system on chip in the access control device. As shown in FIG. 3, the communication apparatus 300 includes a processor 301, a transceiver 302, and a communication line 303.

Further, the communication apparatus 300 may further include a memory 304. The processor 301, the memory 304, and the transceiver 302 may be connected through the communication line 303.

The processor 301 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 301 may be another apparatus having a processing function, for example, a circuit, a component, or a software module. This is not limited.

The transceiver 302 is configured to communicate with another device or another communication network. The another communication network may be an Ethernet, a radio access network (radio access network, RAN), a wireless local area network (wireless local area network, WLAN), or the like. The transceiver 302 may be a module, a circuit, a transceiver, or any apparatus that can implement communication.

The communication line 303 is configured to transfer information between components included in the communication apparatus 300.

The memory 304 is configured to store instructions. The instructions may be a computer program.

The memory 304 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storages (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 304 may exist independently of the processor 301, or may be integrated with the processor 301. The memory 304 may be configured to store the instructions, program code, some data, or the like. The memory 304 may be located inside the communication apparatus 300, or may be located outside the communication apparatus 300. This is not limited. The processor 301 is configured to execute the instructions stored in the memory 304, to implement the signal strength measurement methods provided in the following embodiments of this application.

In an example, the processor 301 may include one or more CPUs, for example, a CPU 0 and a CPU 1 in FIG. 3.

In an optional implementation, the communication apparatus 300 includes a plurality of processors. For example, in addition to the processor 301 in FIG. 3, the communication apparatus 300 may further include a processor 307.

In an optional implementation, the communication apparatus 300 further includes an output device 305 and an input device 306. For example, the input device 306 is a device like a keyboard, a mouse, a microphone, or a joystick, and the output device 305 is a device like a display or a speaker (speaker).

It should be noted that the communication apparatus 300 may be a desktop computer, a portable computer, a network server, a mobile phone, a tablet computer, a wireless terminal, an embedded device, a chip system, or a device having a similar structure in FIG. 3. In addition, the composition structure shown in FIG. 3 does not constitute a limitation on the communication apparatus. In addition to the components shown in FIG. 3, the communication apparatus may include more or fewer components than the components shown in the figure, or some components may be combined, or there may be different component arrangement.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

With reference to the communication system shown in FIG. 2, refer to FIG. 4, a signal strength measurement method provided in an embodiment of this application is described. A terminal device may be any terminal device in the communication system shown in FIG. 2, the first AP may be an access point device associated with a terminal device in the communication system shown in FIG. 2, a second AP may be a neighboring access point device of a first AP in the communication system shown in FIG. 2, and an access control device may be an access control device configured to manage the first AP and the second AP in the communication system shown in FIG. 2. The first AP, the second AP, the terminal device, and the access control device described in the following embodiments may all have components shown in FIG. 3. Processing performed by a single execution body (for example, the first AP, the second AP, the terminal device, or the access control device) shown in this embodiment of this application may alternatively be divided into a plurality of execution bodies. These execution bodies may be logically and/or physically separated. This is not limited.

FIG. 4 is a schematic flowchart of a signal strength measurement method according to an embodiment of this application. As shown in FIG. 4, the method may include step 401 to step 404.

Step 401: One or a plurality of second APs receive a scanning synchronization message.

The scanning synchronization message indicates at least one target scanning channel, and the scanning synchronization message indicates each second AP to switch a scanning channel in a sequence of the at least one target scanning channel.

In a first possible design, the scanning synchronization message may be sent by a first AP to the one or the plurality of second APs.

The first AP may actively send the scanning synchronization message to the one or the plurality of second APs based on a detection requirement, where the scanning synchronization message indicates a target scanning channel, and the target scanning channel is an operating channel of the first AP, in other words, the scanning synchronization message indicates the one or the plurality of second APs to switch from the scanning channel to the operating channel of the first AP. After receiving the scanning synchronization message, all the one or the plurality of second APs may switch from the scanning channel to the operating channel of the first AP simultaneously or simultaneously as much as possible, and based on the following step 402 and step 403, when receiving a coordinated scanning measurement request sent by the first AP, send, on the operating channel of the first AP (that is, a switched scanning channel), a measurement request to one or more terminal devices associated with the first AP. In this way, the first AP can obtain, in one time of coordinated scanning measurement, signal strengths between more second APs and the one or more terminal devices associated with the first AP.

Optionally, the first AP may determine the detection requirement based on an implementation requirement. For example, when the first AP detects that a signal of the terminal device associated with the first AP is weak, and needs to determine whether to guide the terminal device to roam, or determine a destination AP to which the terminal device roams, the first AP determines the detection requirement, and further sends the scanning synchronization message to the one or the plurality of second APs, to obtain signal strengths between more second APs and the terminal device in one coordinated scanning measurement process.

Optionally, the scanning synchronization message sent by the first AP may further include an identifier of the one or more terminal devices associated with the first AP. A second AP that receives the scanning synchronization message may immediately switch from a scanning channel to the operating channel of the first AP, and send a measurement request to a terminal device corresponding to the identifier of the one or more terminal devices.

In a second possible design, the scanning synchronization message may alternatively be sent by a first device to the one or the plurality of second APs.

The first device may be a control device (for example, an AC) in a WLAN system, or the first device may be an AP (for example, a central AP specified by an AC, or any AP in the WLAN system) in the WLAN system. This is not limited.

The first device may send the scanning synchronization message to a plurality of APs managed by the first device. The plurality of APs may include the one or the plurality of second APs, and may further include the first AP. All APs that receive the scanning synchronization message may switch, in the sequence of the at least one target scanning channel indicated by the scanning synchronization message, from scanning channels to a same target scanning channel in the at least one target scanning channel simultaneously or simultaneously as much as possible, to synchronize or to synchronize as much as possible, scanning occasions of the APs for the same scanning channel. When each AP switches from a scanning channel to the operating channel of the first AP, based on the following step 402 and step 403, each second AP may send, on the operating channel of the first AP when receiving the coordinated scanning measurement request sent by the first AP, a measurement request to one or more terminal devices associated with the first AP. In this way, the first AP can obtain, in one time of coordinated scanning measurement, signal strengths between more second APs and the one or more terminal devices associated with the first AP.

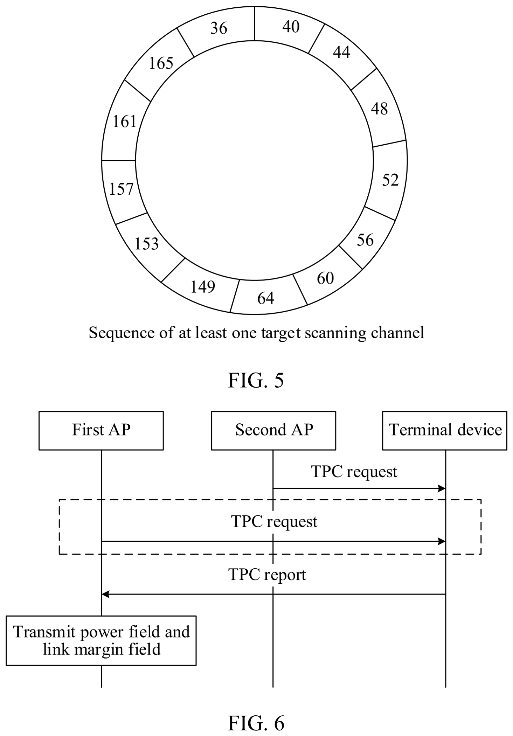

For example, as shown in FIG. 5, an example in which the plurality of APs include the first AP, a second AP1, a second AP2, a second AP3, ..., and a second AP12, and the scanning synchronization message indicates thirteen target scanning channels (for example, ch36, ch40, ch44, ch48, ..., ch161, and ch165) is used. After receiving the scanning synchronization message, the first AP, the second AP1, the second AP2, the second AP3, ..., and the second AP12 may all switch scanning channels in a sequence of the thirteen target scanning channels indicated by the scanning synchronization message. To be specific, the first AP, the second AP1, the second AP2, the second AP3, ..., and the second AP12 may first switch from the scanning channels to ch36, all switch from the scanning channels to ch40 when switching the scanning channels for a next time, all switch from the scanning channels to ch44 when switching the scanning channels after switching to ch40, ..., all switch from the scanning channels to ch165 when switching the scanning channels after switching to ch161, and all switch from the scanning channels to ch36 when switching the scanning channels after switching to ch165. In this way, after receiving the scanning synchronization message, each AP may switch from the scanning channel to ch36 simultaneously or simultaneously as much as possible, and subsequently, each time when switching the scanning channel, may switch from the scanning channel to a same target scanning channel in the sequence of the target scanning channel carried in the scanning synchronization message.

Optionally, the sequence of the at least one target scanning channel may be predefined in a protocol, or may be determined by the first device. This is not limited.

Optionally, the first AP may alternatively send first indication information to the first device, and the first device generates the scanning synchronization message based on the first indication information. The first indication information may indicate a first target scanning channel, and the first target scanning channel is the operating channel of the first AP. The at least one target scanning channel indicated by the scanning synchronization message generated by the first device based on the first indication information may include the first target scanning channel.

In a first possible example, the first device may periodically send the scanning synchronization message to the plurality of APs.

For example, considering that subsequent scanning occasions of the APs for a same scanning channel are deviated because a network event may affect switching of the scanning channel of each AP, the first device may periodically send the scanning synchronization message to the plurality of APs, to synchronize or to synchronize as much as possible, scanning occasions of the APs for the same scanning channel.

In a second possible example, the first device may send the scanning synchronization message to the plurality of APs in a preset time period.

For example, the first device may send the scanning synchronization message to the plurality of APs when a network is idle (for example, a specific period in early morning), to synchronize or to synchronize as much as possible, scanning occasions of the APs for a same scanning channel, so that impact of the scanning synchronization message on network communication can be further reduced.

In a third possible example, when a difference between scanning channels of at least two APs is greater than or equal to a channel difference threshold, the first device may send the scanning synchronization message to the plurality of APs. The first device may request, from each AP, a scanning channel to which each AP switches last time, or each AP may actively send, to the first device, the scanning channel to which the AP switches last time. If the difference between the scanning channels of the at least two APs is greater than or equal to the channel difference threshold, the first device may send the scanning synchronization message to the plurality of APs, to synchronize scanning channels of the APs again.

For example, an example in which the sequence of the at least one target scanning channel is a sequence shown in FIG. 5 (for example, ch36, ch40, ch44, ch48, ch52, ..., and ch165), and the channel difference threshold is 3 is used. It is assumed that a scanning channel to which the AP1 switches last time is ch36, a scanning channel to which the AP2 switches last time is ch36, and a scanning channel to which the AP3 switches last time is ch52. It may be determined, in the sequence shown in FIG. 5, that a ranking of ch36 is 1, and a ranking of ch52 is 5. In this case, it may be determined that a difference between ch52 and ch36 is 4, and the difference is greater than the channel difference threshold. In this case, the first device may send the scanning synchronization message to each AP, to assist each AP in synchronizing or synchronizing as much as possible, scanning occasions for a same scanning channel.

Optionally, the first device may send a scanning synchronization inquiry request to each AP, where the scanning synchronization inquiry request is used to request to obtain the scanning channel to which each AP switches last time. Each AP may send a scanning synchronization inquiry response to the first device based on the scanning synchronization inquiry request, where the scanning synchronization inquiry response may indicate the scanning channel to which each AP switches last time. The first device may determine a difference between scanning channels of any two APs based on the received scanning synchronization inquiry response of each AP, and further determine, based on the difference and the channel difference threshold, whether to send the scanning synchronization message. For example, the first device may send the scanning synchronization inquiry request to the first AP, where the scanning synchronization inquiry request may be used to request to obtain a scanning channel to which the first AP switches last time. The first AP may send a scanning synchronization inquiry response to the first device based on the scanning synchronization inquiry request, where the scanning synchronization inquiry response may indicate the scanning channel to which the first AP switches last time. For another example, the first device may send the scanning synchronization inquiry request to the second AP, where the scanning synchronization inquiry request may be used to request to obtain a scanning channel to which the second AP switches last time. The second AP may send a scanning synchronization inquiry response to the first device based on the scanning synchronization inquiry request, where the scanning synchronization inquiry response may indicate the scanning channel to which the second AP switches last time.

For example, the scanning synchronization message may include content shown in Table 1:

**Table 1**

| | | | | |
|---|---|---|---|---|
| ac_token | ap_token | type | radio_id | action |

ac_token is an identifier of the first device; ap_token is an identifier of an AP; type is a type, and specifies a coordinated scanning function; radio_id is a radio frequency identification number (that is, the at least one target scanning channel); and action is an action field, and a value of the action field may be shown in Table 2.

**Table 2**

| action value (action value) | Function descriptions |
|---|---|
| 0 | Scanning synchronization message (async request) |
| 1 | Scanning synchronization inquiry response (async report) |
| 2 | Scanning synchronization inquiry request (async inquiry) |

When the value of action is 0, it indicates that this packet is a scanning synchronization message. When the value of action is 1, it indicates that this packet is a scanning synchronization inquiry response. When the value of action is 2, it indicates that this packet is a scanning synchronization inquiry request.

It may be understood that the foregoing three possible examples may be used independently, or may be used in combination with each other. This is not limited.

Based on the foregoing descriptions of the scanning synchronization message, when receiving the scanning synchronization message of the first device, each AP may switch the scanning channel (or described as resetting a state machine) in the sequence of the at least one target scanning channel, to implement scanning occasion synchronization.

A time difference between arrival of the scanning synchronization message at different APs may be less than or equal to a third threshold, and a time difference between switching of the APs to a same scanning channel may be less than or equal to the third threshold.

In a possible design, when sending the scanning synchronization message to each AP, the first device may deliver the scanning synchronization message from a primary core of a configuration command of the first device to a same secondary core, and send the scanning synchronization message to each AP via the same secondary core, to ensure that a time difference between arrival of the scanning synchronization message at different APs may be less than or equal to the third threshold. For example, the first device may control time for processing the scanning synchronization message by the secondary core, to ensure that a time difference between arrival of the scanning synchronization message at different APs is controlled to be at a millisecond level.

In another possible design, the first device may alternatively send the scanning synchronization message to each AP in a multi-core processing (for example, multi-CPU core processing) manner, in other words, send the scanning synchronization message to different APs via different CPU cores, to ensure that a time difference between arrival of the scanning synchronization message at different APs may be less than or equal to the third threshold. For example, each CPU core of the first device may send the scanning synchronization message to each AP via a millisecond (millisecond, ms)-level timer, to ensure that a time difference between arrival of the scanning synchronization message at different APs is controlled to be at a millisecond level.

Step 402: When determining that a scanning channel of the system is the operating channel of the first AP, the first AP sends the coordinated scanning measurement request to the one or the plurality of second APs. Correspondingly, the one or the plurality of second APs receive the coordinated scanning measurement request from the first AP.

If the first AP and the one or the plurality of second APs receive the scanning synchronization message from the first device, the first AP may switch from a scanning channel of the first AP to a target scanning channel in the at least one target scanning channel in the sequence of the at least one target scanning channel. When the scanning channel of the first AP is switched to the operating channel of the first AP, the first AP may determine that the scanning channel of the system is the operating channel of the first AP. Alternatively, step 402 may be described as follows: When a scanning channel of the first AP is switched to the operating channel of the first AP, the first AP sends the coordinated scanning measurement request to the one or the plurality of second APs. The coordinated scanning measurement request may carry an identifier of one or more terminal devices. The coordinated scanning measurement request is used to request each second AP to initiate a measurement request to the one or more terminal devices. The one or more terminal devices are terminal devices associated with the first AP.

If the first AP sends the scanning synchronization message to the one or the plurality of second APs, when sending the scanning synchronization message, the first AP may directly determine that the scanning channel of the system is the operating channel of the first AP, and the first AP sends the coordinated scanning measurement request to the one or the plurality of second APs. In this case, the first AP may send the scanning synchronization message and the coordinated scanning measurement request separately, or the first AP may send only one type of message. If the first AP sends only one type of message, the message carries both the scanning synchronization message and the coordinated scanning measurement request; the message is the scanning synchronization message, and the coordinated scanning measurement request is carried in the scanning synchronization message; or the message is the coordinated scanning measurement request, and the scanning synchronization message is carried in the coordinated scanning measurement request. Optionally, the coordinated scanning measurement request may further carry indication information, where the indication information indicates the one or the plurality of second APs to initiate a measurement request to the one or more terminal devices on a specified channel, and the specified channel is the operating channel of the first AP. For example, the indication information may include an identifier of the operating channel of the first AP; or the indication information may include an identifier of the first AP. The second AP determines the operating channel of the first AP based on the identifier of the first AP.

Optionally, the first AP may send the coordinated scanning measurement request to the one or the plurality of second APs in any one of the following manners:
Manner 1: The first AP sends the coordinated scanning measurement request to the one or the plurality of second APs in a broadcast manner, where the coordinated scanning measurement request may not specify an AP, and all APs that receive the coordinated scanning measurement request may be second APs in this embodiment of this application, and may send, based on the received coordinated scanning measurement request, a measurement request to the one or more terminal devices associated with the first AP.

Manner 2: The first AP sends the coordinated scanning measurement request to the one or the plurality of second APs in a broadcast manner, where the coordinated scanning measurement request may carry an identifier of a second AP, and the second AP specified in the coordinated scanning measurement request sends a measurement request to the one or more terminal devices associated with the first AP.

Manner 3: The first AP sends the coordinated scanning measurement request to the one or the plurality of second APs in a unicast manner, and a second AP that receives the coordinated scanning measurement request sends a measurement request to the one or more terminal devices associated with the first AP.

Optionally, when the scanning synchronization message is sent by the first AP to the one or the plurality of second APs, the first AP may include the coordinated scanning measurement request in the scanning synchronization message, to reduce signaling overheads. It may be understood that, the first AP may alternatively send the scanning synchronization message and the coordinated scanning measurement request separately. This is not limited.

Step 403: When a scanning channel of any second AP is switched to the operating channel of the first AP, the any second AP sends the measurement request to the one or more terminal devices. Correspondingly, at least one first terminal device receives one or more measurement requests.

The second AP may switch, based on the scanning synchronization message, from the scanning channel of the second AP to a target scanning channel in the at least one target scanning channel in the sequence of the at least one target scanning channel. When the scanning channel of the second AP is switched to the operating channel of the first AP, the second AP may pretend to be the first AP to send the measurement request to the one or more terminal devices associated with the first AP.

In a first possible implementation, operating channel information of each AP (including an operating channel of the AP and an operating channel of another AP) may be preconfigured for each AP. The second AP may determine the operating channel of the first AP based on the preconfigured operating channel information.

In a second possible implementation, the first AP may alternatively send, to the second AP, indication information that may indicate the operating channel of the first AP, and the second AP may determine the operating channel of the first AP based on the indication information. A frame in which the indication information is located and a frame in which the coordinated scanning measurement request is located may not be a same frame. This is not limited.

In a third possible implementation, the first AP may alternatively include, in the coordinated scanning measurement request, indication information that may indicate the operating channel of the first AP, and the second AP may determine the operating channel of the first AP based on the indication information.

In the second possible design and the third possible design, the indication information may include the identifier of the operating channel of the first AP; or the indication information may include the identifier of the first AP. The second AP determines the operating channel of the first AP based on the identifier of the first AP.

Optionally, the measurement request may include the identifier of the first AP, for example, a media access control (media access control, MAC) address or a basic service set identifier (basic service set identifier, BSSID) of the first AP. This is not limited.

When the second AP pretends to be the first AP to send the measurement request to the one or more terminal devices associated with the first AP, a source address of a message to which the measurement request belongs may be set to the identifier of the first AP. When receiving the measurement request, the terminal device determines, based on the identifier of the first AP, that the measurement request is a measurement request sent by the first AP, and further, the terminal device may send a measurement result to the first AP.

Optionally, the measurement request may further include the identifier of the second AP. When the terminal device subsequently sends the measurement result to the first AP based on the measurement request, the measurement result may carry the identifier of the second AP in the measurement request, so that the first AP determines, based on the identifier of the second AP, a second AP corresponding to the measurement result.

For example, the second AP may set a source MAC address in the measurement request to the MAC address of the first AP, and set, to the identifier of the second AP, another field (for example, ap_token) that may carry an identifier of an AP and that is in the measurement request. In this way, when receiving the measurement request, the terminal device may determine, based on the source MAC address, that the measurement request is the measurement request sent by the first AP, and further send the measurement result to the first AP, where the measurement result may carry the identifier of the second AP in the measurement request, so that the first AP determines the second AP corresponding to the measurement result.

Optionally, when the scanning channel of the second AP is switched to the operating channel of the first AP, the second AP may send, in scanning duration, the measurement request to the one or more terminal devices associated with the first AP. The scanning duration may be duration of a scanning channel to which the AP switches, may be described as duration in which the AP is in the scanning channel, or may be described as duration in which the AP stays in the scanning channel. This is not limited. The scanning duration of the scanning channel may be configured by the first device, or may be predefined in a protocol. This is not limited. For example, the scanning duration may be 60 ms.

Based on the foregoing descriptions of the measurement request, the second AP may send the measurement request to the terminal device in a plurality of manners. For example, refer to any one of the following two examples for sending the measurement request to the terminal device.

In a first example, the second AP may send, in a transmission power control (transmission power control, TPC) manner, the measurement request to the one or more terminal devices associated with the first AP.

The second AP may measure, based on the 802.11h TPC report protocol by sending a TPC request (that is, the measurement request) to the terminal device, a strength of a downlink signal of the one or more terminal devices associated with the first AP.

For example, as shown in FIG. 6, the second AP may send the TPC request to the one or more terminal devices associated with the first AP. The terminal device may return a TPC report (TPC report) to the first AP based on the TPC request. The TPC report may also be referred to as a measurement report. The TPC report may include a power field and a link margin (link margin) field. The power field indicates transmit power used by the terminal device to send the TPC report. The link margin field indicates a difference between signal quality (for example, a signal strength) in the TPC request received by the terminal device and worst signal quality that can be tolerated by the terminal device. When receiving the TPC report, the first AP may determine, based on the difference indicated by the link margin field and the worst signal quality that can be tolerated by the terminal device, the signal strength of the TPC request received by the terminal device. The signal strength is a strength of a downlink signal that is between the second AP and the terminal device and that corresponds to the TPC report. Alternatively, the first AP may determine, based on a plurality of TPC reports reported by the terminal device, differences indicated by the plurality of TPC reports. A larger difference indicates a stronger strength of a downlink signal that is between the second AP and the terminal device and that corresponds to the difference. When the first AP makes a roaming decision for the terminal device (for example, whether the terminal device needs to be guided to roam, or a destination AP to which the terminal device is guided to roam), the first AP may determine, based on the differences indicated by the plurality of TPC reports, whether to guide the terminal device to roam. If the terminal device is guided to roam, a proper second AP is selected for the terminal device as the destination AP, for example, a second AP corresponding to a maximum difference is selected as the destination AP.

The TPC request may include content shown in Table 3:

**Table 3**

| | | | |
|---|---|---|---|
| Category | Spectrum management action | Dialog token | TPC request element |
| Category | Spectrum management action | Dialog token | TPC request element |

In a second example, the second AP may alternatively send, in a link measure (link measure, LM) manner, the measurement request to the one or more terminal devices associated with the first AP.

The first AP and the second AP may measure, based on the 802.11k LM protocol by sending an LM request (that is, the measurement request) to a terminal device, a strength of a downlink signal of the one or more terminal devices associated with the first AP.

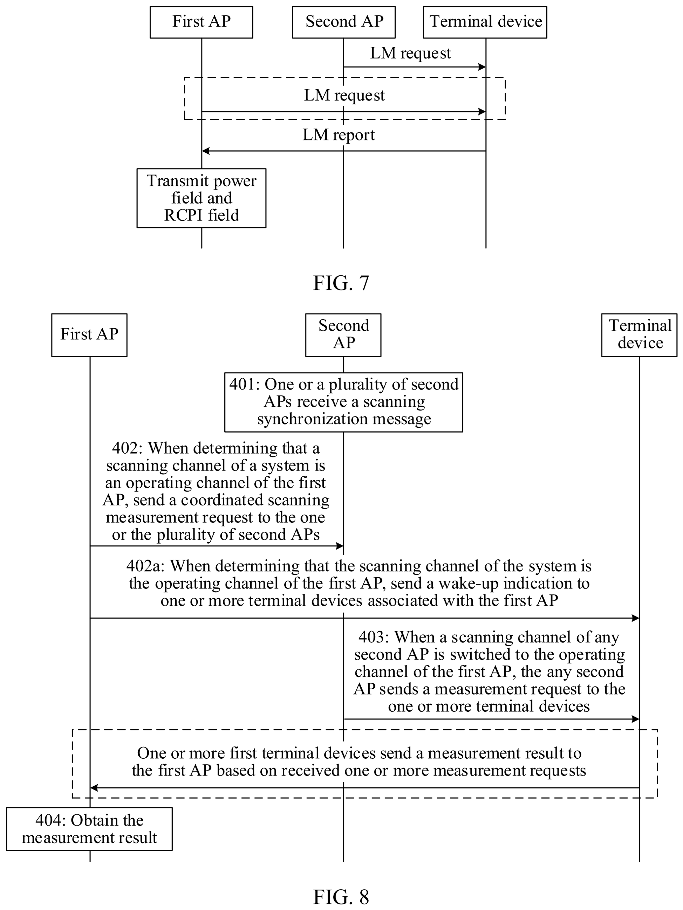

For example, as shown in FIG. 7, the second AP may send the LM request to the one or more terminal devices associated with the first AP. The terminal device may return an LM report (LM report) to the first AP based on the LM request. The LM report may also be referred to as a measurement report. The LM report may include a power field and a received channel power indicator (received channel power indicator, RCPI) field. The power field indicates transmit power used by the terminal device to send the TPC report. The RCPI field indicates a downlink signal strength obtained by the terminal device.

The LM request may include content shown in Table 4:

**Table 4**

| | | | | |
|---|---|---|---|---|
| Category | Radio measurement action | Dialog token | Transmit power used | Max transmit power |
| Category | Radio measurement action | Dialog token | Transmit power used | Max transmit power |

In the foregoing two examples, the Dialog token field is originally used to correspond each measurement request to a measurement report. In this embodiment of this application, an ID number of the Dialog token field may be set to the identifier of the second AP, to distinguish between neighboring APs. For example, when each second AP sends a measurement request (for example, a TPC request or an LM request) to a terminal device, each second AP may set a Dialog token field in the measurement request to an identifier of each second AP. When sending a measurement report to the first AP, the terminal device may include the Dialog token field in the measurement request in the measurement report. When receiving the measurement report sent by the terminal device, the first AP may determine, based on the Dialog token field in the measurement report, a second AP corresponding to the measurement report.

Optionally, the first AP may also send a measurement request to the terminal device. The measurement request may include the identifier of the first AP. For example, a source MAC address in the measurement request may be the identifier of the first AP, and the identifier of the first AP is filled in another field (for example, ap_token) that may carry an identifier of an AP and that is in the measurement request. In this way, when receiving the measurement request, the terminal device may consider, based on the source MAC address, that the measurement request is a measurement request sent by the first AP, and further send a measurement result to the first AP, where the measurement result may carry the identifier of the first AP in the measurement request, so that the first AP determines that the first AP corresponds to the measurement result.

Optionally, when determining that the scanning channel of the system is the operating channel of the first AP, the first AP may send, in the scanning duration, the measurement request to the one or more terminal devices associated with the first AP. For example, when the scanning channel of the first AP is switched to the operating channel of the first AP, the first AP sends, in the scanning duration, the measurement request to the one or more terminal devices associated with the first AP. For another example, when sending the coordinated scanning measurement request to the one or the plurality of second APs, the first AP sends, in the scanning duration, the measurement request to the one or more terminal devices associated with the first AP.

Optionally, the first AP may alternatively send a measurement request to a terminal device with reference to the foregoing TPC manner or LM manner. For related descriptions, refer to the foregoing specific descriptions of the TPC manner and the LM manner. Details are not described again.

Optionally, when sending the measurement request to the one or more terminal devices associated with the first AP, the first AP and each second AP may encrypt the measurement request, to avoid interference that is of a non-AP device pretending to be the AP and that is on coordinated scanning measurement.

Optionally, after sending the measurement request to the one or more terminal devices associated with the first AP, each second AP may further send a coordinated scanning measurement response to the first AP. The coordinated scanning measurement response may indicate a measurement request record that has been sent by the second AP.

For example, the coordinated scanning measurement response may carry one or more of the following information: a quantity of measurement requests sent by the second AP, an identifier of a terminal device corresponding to the sent measurement request, a quantity of times of sending a measurement request to each terminal device, and the like. This is not limited.

For example, when the coordinated scanning measurement response sent by the second AP carries the quantity of measurement requests sent by the second AP, the first AP may determine, based on the quantity, whether coordinated scanning measurement is successfully performed. For example, if the quantity is less than or equal to a threshold (for example, 0), it may be determined that the coordinated scanning measurement of the second AP is not successfully performed; or if the quantity is greater than a threshold, it is determined that the coordinated scanning measurement of the second AP is successfully performed.

For another example, when the coordinated scanning measurement response sent by the second AP carries the identifier of the terminal device corresponding to the measurement request sent by the second AP, the first AP may determine terminal devices to which the second AP sends measurement requests. Alternatively, the first AP may compare the identifier with that of a terminal device corresponding to a measurement result, to determine terminal devices to which the second AP sends measurement requests and that the first AP receives measurement results reported by the terminal devices, or determine terminal devices to which the second AP sends measurement requests and that the first AP receives no measurement result reported by the terminal devices; and further determine a signal strength between each second AP and each terminal device (for example, if a second AP sends a measurement request to a terminal device, but the first AP receives no measurement result that corresponds to the second AP and that is reported by the terminal device, the first AP may determine that a signal strength between the terminal device and the second AP is weak).

For still another example, when sending a measurement request to each terminal device, the second AP may send a plurality of measurement requests to each terminal device, to improve a success rate of coordinated scanning measurement. When the second AP sends a coordinated scanning measurement response to the first AP, the response may carry a quantity of times that the second AP sends the measurement request to each terminal device. The first AP may determine, based on the coordinated scanning measurement response, that the second AP sends the plurality of measurement requests to each terminal device. Subsequently, if the first AP receives no measurement result that corresponds to the second AP and that is reported by a terminal device, it may be determined that a signal strength between the terminal device and the second AP is weak.

Step 404: The first AP obtains the measurement result.

The measurement result may indicate a signal strength between each of at least one second AP and at least one terminal device, the one or the plurality of second APs include the at least one second AP, and the one or more terminal devices associated with the first AP include the at least one terminal device.

In a possible design, one or more first terminal devices may send a measurement report to the first AP based on received one or more measurement requests, and the measurement report may include the measurement result.

The one or more first terminal devices may be one or more terminal devices in the at least one terminal device.

Optionally, when sending measurement reports to the first AP, the first terminal device may send all the measurement reports by using different signaling, or may aggregate measurement reports in a period of time into one piece of signaling and send the signaling to the first AP, to reduce the signaling overheads.

Optionally, the first AP may alternatively send received measurement reports to the first device separately by using different signaling, or may aggregate measurement reports in a period of time into one piece of signaling and send the signaling to the first device, to reduce the signaling overheads.

In another possible design, when the first AP receives no measurement report about a third AP from a second terminal device in second duration, the first AP determines that a signal strength between the third AP and the second terminal device is less than a signal strength threshold. The one or more terminal devices associated with the first AP include the second terminal device, and the one or the plurality of second APs include the third AP.

When the one or the plurality of second APs send a measurement request to a terminal device, signal strengths between some second APs and the terminal device may be relatively strong. The terminal device (for example, the first terminal device) may receive measurement requests sent by the some second APs, and further send a measurement result to the first AP. Alternatively, signal strengths between some second APs and a terminal device may be relatively weak, and the terminal device (for example, the second terminal device) may not receive measurement requests sent by the some second APs (for example, the third AP), and therefore cannot send a measurement result to the first AP. In this case, the first AP may determine that the signal strength between the third AP and the second terminal device is less than the signal strength threshold.

Based on the method shown in FIG. 4, a scanning synchronization message is sent to the plurality of second APs in the WLAN system, to indicate the plurality of second APs to switch, after receiving the scanning synchronization message, scanning channels in a sequence of at least one target scanning channel indicated by the scanning synchronization message, so that the plurality of second APs can switch to a same scanning channel simultaneously or simultaneously as much as possible. In this way, an associated AP whose operating channel is the scanning channel may obtain, in one time of coordinated scanning measurement, signal strengths between more neighboring APs and a terminal device associated with the associated AP, and a coordinated scanning measurement effect can be improved, so that management policies such as radio frequency resource management and roaming policies are better supported, and communication performance is improved.

Based on the method shown in FIG. 4, optionally, as shown in step 402a in FIG. 8, when determining that the scanning channel of the system is the operating channel of the first AP, the first AP may further send a wake-up indication to the one or more terminal devices associated with the first AP. Correspondingly, at least one terminal device receives the wake-up indication from the first AP. Alternatively, step 402a may be described as follows: When the scanning channel of the first AP is switched to the operating channel of the first AP, the first AP sends a wake-up indication to the one or more terminal devices. The wake-up indication is used to wake up a terminal device, or is described as a wake-up indication that is used to make the terminal device enter a wake-up state (or is described as a non-sleep state).

In a first possible implementation, the wake-up indication may be a beacon frame.

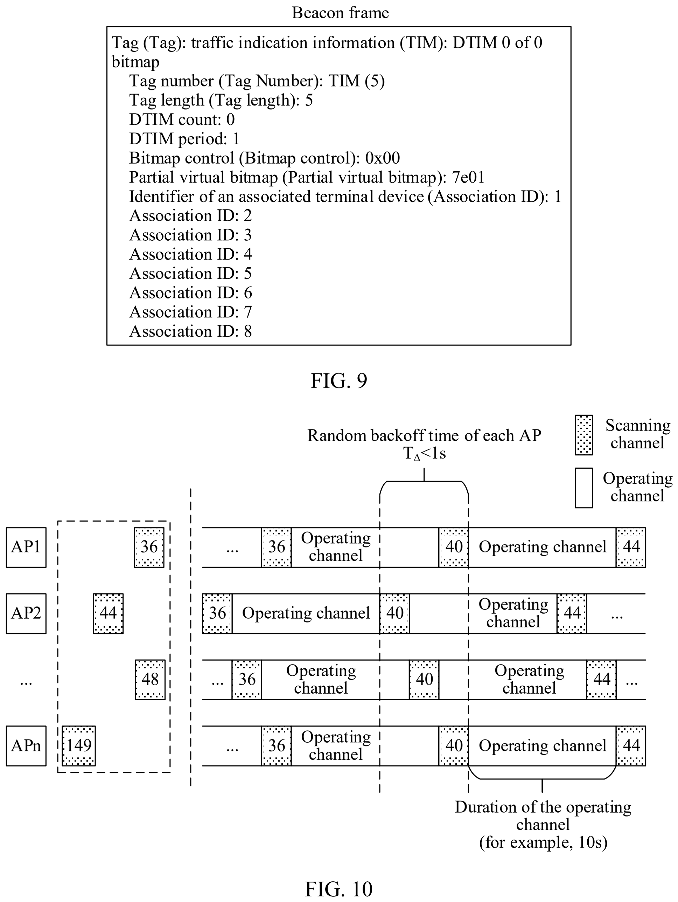

For example, as shown in FIG. 9, a delivery traffic indication message (delivery traffic indication message, DTIM) count field (that is, a DTIM count field) of the beacon frame may be set to 0, indicating that the beacon frame is a wake-up indication; or a DTIM duration field (that is, a DTIM period field) of the beacon frame may be set to 1, indicating that the beacon frame is a wake-up indication.

Optionally, as shown in FIG. 9, the beacon frame may further carry an identifier (Association ID) of a terminal device associated with the beacon frame, to indicate a terminal device that needs to be woken up. For example, the Association ID may be set to 1, 2, 3, 4, 5, 6, 7, and 8, to indicate that terminal devices that need to be woken up are a terminal device 1 to a terminal device 8.

Optionally, as shown in FIG. 9, the beacon frame may further include the following content: a traffic indication information (traffic indication message, TIM) field, a tag number (Tag Number) field, a tag length (Tag length) field, a bitmap control (Bitmap control) field, a partial virtual bitmap (Partial virtual bitmap) field, and the like. For example, the tag number field may be TIM (5), the tag length field may be 5, the bitmap control field may be 0x00, and the partial virtual bitmap field may be 7e01.

In a second possible implementation, the wake-up indication may alternatively be a data packet.

For example, the data packet may be a service packet, or the data packet may be a null packet (where a packet type of the data packet is no data). This is not limited. For example, a packet type (that is, a type field) in a packet header may be set to quality of service null data (quality of service null data, QoS Null data), to indicate that the data packet is a No data packet.

The first AP may send a normal service packet to a terminal device when there is a service transmission requirement, so that the terminal device is in a wake-up state. If the first AP currently has no service transmission requirement, the first AP may send a null packet to a terminal device, so that the terminal device is in a wake-up state.

In a third possible implementation, the foregoing two possible designs may be combined for use, in other words, the wake-up indication may include the beacon frame and the data packet.

For example, the first AP may send a normal service packet to a terminal device when there is a service transmission requirement, so that the terminal device is in a wake-up state. If the first AP has no service transmission requirement currently, the first AP may send a beacon frame and/or a null packet to a terminal device, so that the terminal device is in a wake-up state.

Based on the descriptions of the wake-up indication in the foregoing three possible implementations, when the first AP sends the wake-up indication to the one or more terminal devices associated with the first AP, the first AP may use a multicast manner to ensure that all the associated terminal devices can be woken up, or may use a unicast manner to wake up one or some terminal devices as needed. This is not limited.

For example, an example in which a beacon frame having a wake-up function is sent in a multicast manner is used. A DTIM period field of the beacon frame may be set to 1, and a first bit of a TIM bitmap control (Bitmap Control) field may be set to 1, so that each beacon frame can indicate a multicast buffer status. A more data (More Data) bit of a frame control (Frame Control) field of the multicast data frame is set to 1, so that a terminal device maintains in a state of receiving a subsequent multicast frame, to avoid sleeping.

In another example, an example in which a beacon frame having a wake-up function is sent in a unicast manner is used. A TIM bitmap control (Bitmap Control) field and partial virtual bitmap (Partial Virtual Bitmap) field in the beacon frame may be set, so that a Bitmap corresponding to a target terminal device is 1, and each beacon frame can indicate a buffer status of the target terminal device. A More Data bit of a Frame Control field of a data frame of the target terminal device is set to 1, so that the terminal device maintains in a state of receiving a subsequent unicast frame, to avoid sleeping.

Optionally, in the foregoing two examples, in addition to sending the data frame, the more data field on the data frame may also be set to 1, to avoid sleeping.

Optionally, when sending the wake-up indication to a terminal device, the first AP may send the wake-up indication to the terminal device in first duration, so that the terminal device is continuously in a wake-up state in the first duration.

In a first possible design, the first duration may be equal to the scanning duration.

Each second AP may send a measurement request to a terminal device in the scanning duration. To ensure that the terminal device is in a wake-up state when each second AP sends the measurement request to the terminal device, the first AP may determine the first duration based on the scanning duration. In other words, the first duration is equal to the scanning duration. The first AP sends the wake-up indication to the terminal device in the scanning duration, to ensure that the terminal device is in the wake-up state when each second AP sends the measurement request to the terminal device in the scanning duration.

In a second possible design, the first duration may be greater than the scanning duration.

To avoid packet collision on an air interface when each second AP sends a measurement request to a terminal device in a case of strict synchronization, each second AP may send the measurement request to the terminal device in a specific time range based on a random backoff mechanism. In addition, to ensure that the terminal device is in the wake-up state when each second AP sends the measurement request to the terminal device, the first AP may determine the first duration based on the scanning duration and the random backoff mechanism. In other words, a start moment of the first duration may be earlier than a start moment of the scanning duration, and an end moment of the first duration may be later than an end moment of the scanning duration.

For example, as shown in FIG. 10, each second AP (for example, an AP1, an AP2, ..., or an APn) may switch to a scanning channel in a gap of an operating channel. If the scanning channel after switching is the operating channel of the first AP, each second AP may send, in scanning duration of the scanning channel based on the random backoff mechanism, a measurement request to a terminal device associated with the first AP, to reduce a probability of packet collision.

Duration of the operating channel may be configured by the first device, or may be predefined in a protocol. This is not limited. For example, the duration of the operating channel may be 10s.

Optionally, a random backoff range does not exceed 1s. For example, the random backoff range may be (-60 ms, 60 ms), (-120 ms, 120 ms), or the like. This is not limited.

Based on the foregoing random backoff mechanism, optionally, a difference between the start moment of the first duration and the start moment of the scanning duration may be a first threshold, a difference between the end moment of the first duration and the end moment of the scanning duration may be a second threshold, and both the first threshold and the second threshold are greater than or equal to a maximum value of random backoff duration of the plurality of second APs.

On the basis that the first AP and each second AP synchronize or synchronize as much as possible, based on the scanning synchronization message, scanning occasions for a same scanning channel, the first AP can obtain, by observing an occasion of switching from the scanning channel to the operating channel of the first AP, an occasion of switching from the scanning channel to the operating channel of the first AP by each second AP.

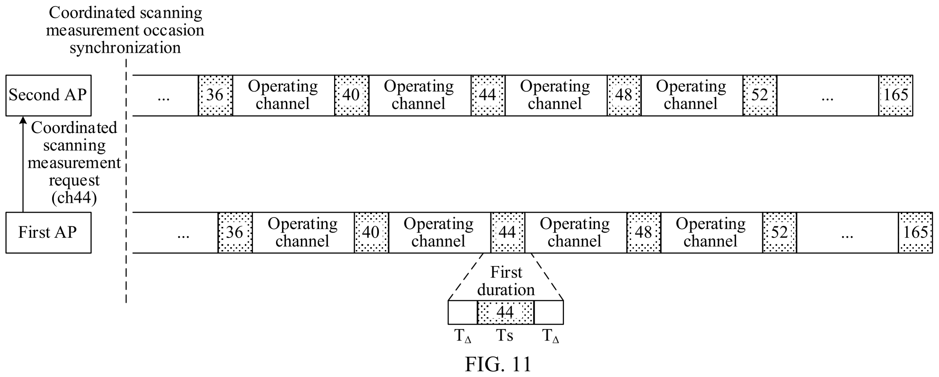

For example, as shown in FIG. 11, an example in which the first threshold and the second threshold are both T_{Δ} is used. The first AP and each second AP may switch scanning channels every 10s in turn based on the scanning synchronization message and the sequence (for example, ch36, ch40, ch44, ch48, ..., and ch165) of the at least one target scanning channel in FIG. 5. When each second AP switches from the scanning channel to the operating channel (for example, ch44) of the first AP, each second AP may send, in duration Ts of the scanning channel, a measurement request to a terminal device associated with the first AP. The first AP may send a wake-up indication to the terminal device T_{Δ} in advance, and continuously performs the sending for 2*T_{Δ}+Ts (that is, the first duration), so that the terminal device is continuously in a wake-up state for 2*T_{Δ}+Ts. In this way, the terminal device can receive the measurement request sent by each second AP.

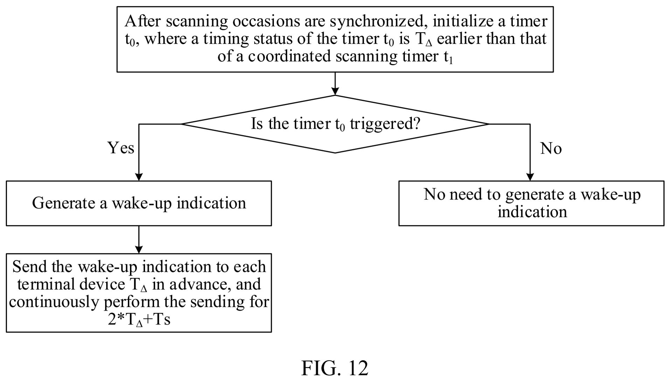

In another example, as shown in FIG. 12, an example in which the first AP sends the wake-up indication to each terminal device based on the first duration shown in FIG. 11 is used. It is assumed that the first AP and each second AP trigger coordinated scanning based on a coordinated scanning timer t₁ after synchronizing or synchronizing as much as possible, scanning occasions based on the scanning synchronization message. The first AP may initialize a timer t₀. A timing status of the timer t₀ is T_{Δ} earlier than that of the coordinated scanning timer t₁. If the timer t₀ is triggered, the first AP may generate the wake-up indication, send the wake-up indication to each terminal device T_{Δ} in advance, and continuously perform the sending for 2*T_{Δ}+Ts, so that the terminal device is continuously in a wake-up state for 2*T_{Δ}+Ts. In this way, the terminal device can receive a measurement request sent by each second AP. If the timer t₀ is not triggered, the first AP may not need to generate the wake-up indication.

Optionally, before the first AP sends the wake-up indication to the one or more terminal devices, the first AP may obtain a measurement requirement, and send the wake-up indication to a terminal device based on the measurement requirement. For example, when detecting that signal quality of one or more terminal devices associated with the first AP is poor, the first AP may determine that there is a measurement requirement, send the wake-up indication to the terminal device, and trigger a signal strength measurement method.

In another example, when another device (for example, a second AP or a terminal device) other than the first AP detects that signal quality or service quality of a terminal device is poor, the another device may send a measurement requirement to the first AP, and the first AP may send the wake-up indication to the terminal device based on the measurement requirement, and trigger a signal strength measurement method.

Optionally, different from that the first AP sends the wake-up indication to a terminal device based on a measurement requirement, before the first AP sends the wake-up indication to the one or more terminal devices, the first AP may send the wake-up indication to the one or more terminal devices in response to the scanning channel being switched to the operating channel of the first AP.

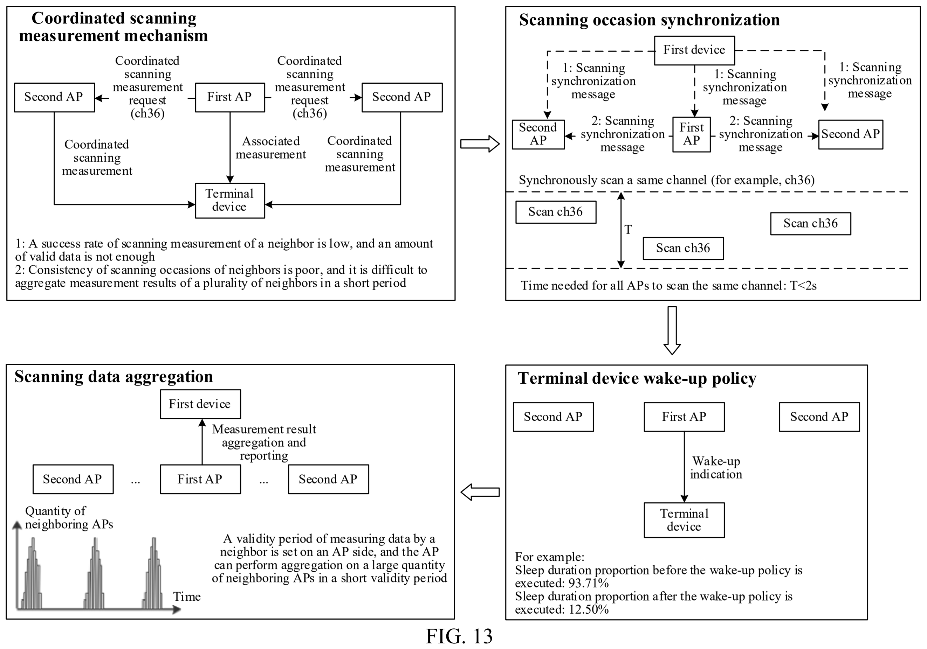

Based on the method shown in FIG. 4 to FIG. 12, as shown in FIG. 13, in embodiments of this application, scanning occasion synchronization (which may be implemented by sending the scanning synchronization message by the first device, or may be implemented by sending the scanning synchronization message by the first AP) and terminal device wake-up policies may be added based on a coordinated scanning measurement mechanism, to cooperate and collaborate with each other to achieve an objective of enhancing the coordinated scanning effect.

A scanning occasion synchronization mechanism may synchronize scanning occasions of global APs. Scanning occasions of the global APs for a same scanning channel may be coordinated to a same scanning occasion or similar scanning occasions, to ensure that the scanning occasions of all the APs are globally synchronized in a network. Based on this, the first AP may identify a coordinated scanning measurement occasion of the second AP (in other words, identify that the second AP switches from a scanning occasion to a scanning occasion of the operating channel of the first AP). A wake-up policy with a short periodicity and lasting for the first duration is executed for a terminal device associated with the first AP (in other words, the wake-up indication is periodically sent to the terminal device in the first duration, where the periodicity may be a short periodicity), to ensure that the terminal device is in a wake-up state when each second AP initiates a coordinated scanning measurement process, and reduce sleep time of the terminal device during the measurement. In addition, the wake-up policy is stopped in time when the coordinated scanning measurement ends, to reduce power consumption of the terminal device.

In addition, because scanning occasions of all second APs on the operating channel of the first AP are synchronized, more second APs may send measurement requests to a terminal device associated with the first AP at similar time. Because the terminal device is in a wake-up state, the terminal device may obtain, in one coordinated scanning measurement process, more measurement requests sent by second APs, and report a measurement result. The first AP may obtain, in one time of coordinated scanning measurement, signal strengths between more neighboring APs and the terminal device associated with the first AP, to effectively enhance coordinated scanning efficiency of the first AP and the second AP, effectively avoid a neighboring missing problem, and improve neighboring detection accuracy. Further, a TPC solution is effectively guided based on the measurement result (for example, the first AP may determine, based on the measurement result reported by the terminal device, whether to adjust transmit power), or a proper second AP is selected, when the terminal device is guided to roam, as a target AP in time based on the measurement result reported by the terminal device. In this way, a management policy is effectively supported, and communication performance is improved.

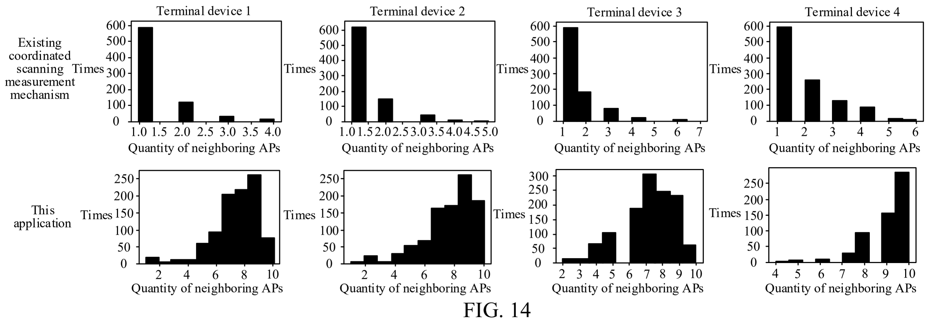

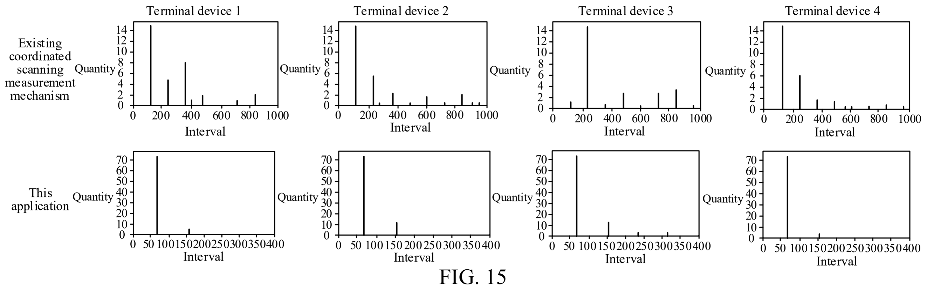

The inventor of this application verifies the technical solutions provided in embodiments of this application based on the following test environment. Verification results are shown in FIG. 14, FIG. 15, Table 5, and Table 6.

The test environment is as follows: a channel bandwidth is 40 MHz, the at least one target scanning channel includes six target scanning channels: {ch36, ch44, ch52, ch60, ch149, and ch157}, a scanning time interval is 10s, and coordinated scanning duration (that is, the scanning duration) is 60 ms. In other words, scanning is performed in turn in the sequence of ch36, ch44, ch52, ch60, ch149, and ch157, scanning on two channels is performed once at an interval of 10s, and scanning of each channel lasts 60 ms. Therefore, for any channel, an interval between two times of scanning on the same channel is 60s.

Refer to FIG. 14. A horizontal axis of each subgraph in FIG. 14 indicates a quantity of neighboring APs whose signal strengths can be obtained in single scanning duration, and a vertical axis indicates a quantity of times of measuring the quantity. Two subgraphs in each column in FIG. 14 are results of verification performed for a same terminal device, in other words, quantities of signal strengths that are from a neighboring AP to a terminal device 1, a terminal device 2, a terminal device 3, and a terminal device 4 and that are obtained by an associated AP are tested. In an existing coordinated scanning measurement mechanism (where scanning synchronization is not implemented), a large quantity of tests indicates that there is a high probability that a signal strength of only one neighboring AP can be obtained in single scanning duration. For example, in each of the upper four subgraphs in FIG. 14, a signal strength of only one neighboring AP can be obtained through about 600 tests. In embodiments of this application, a quantity of neighboring APs whose signal strengths can be obtained in single scanning duration is mainly 6 to 10. In other words, according to the solutions in embodiments of this application, more neighboring APs may all complete scanning of a same channel in a short period, and a quantity of signal strengths of neighboring APs that can be obtained by the associated AP in the single scanning duration is greatly increased.

Refer to FIG. 15. For a single neighboring AP, FIG. 15 shows distribution of time intervals at which the associated AP successively obtains signal strengths from the neighboring AP to a terminal device. A horizontal axis of each subgraph in FIG. 15 indicates a time interval, and a unit is second (s), and a vertical axis indicates a quantity. For a specified associated AP (for example, the AP1 whose channel is ch36), if another neighboring AP is scanning ch36 each time when a scanning channel is switched to ch36, a time interval for the AP1 to successively obtain signal strengths of a neighboring AP is a time interval between two times of scanning ch36 (an interval for scanning a single channel, that is, 60s). If a problem of synchronizing scanning occasions exists, when ch36 is scanned, the neighboring AP may be in an operating channel or another scanning channel. As a result, the AP1 cannot obtain a signal strength of the neighboring AP. In this case, the signal strength of the neighboring AP can be obtained only after a plurality of scanning intervals. The upper four subgraphs in FIG. 15 present measurement results of the existing coordinated scanning measurement mechanism (where scanning synchronization is not implemented). The measurement results show that time intervals at which the associated AP successively obtains signal strengths from a neighboring AP to a terminal device are not centrally distributed in a scanning interval of a single channel, but are relatively scattered in other integer multiples (such as 120s, 240s, 360s, 480s, 600s, 720s, and 840s) of the scanning interval of the single channel. The lower four subgraphs in FIG. 15 present intervals in measurement results of embodiments of this application. The measurement results show that time intervals for obtaining signal strengths from a neighboring AP to a terminal device by the associated AP may be centrally distributed in a scanning interval of a single channel. In other words, in the solutions in embodiments of this application, the associated AP and the neighboring AP can be more synchronized in scanning occasions, so that the associated AP can obtain signal strengths of more neighboring APs in one coordinated scanning measurement request. This effectively improves the coordinated scanning measurement effect.

In a scanning test, if data transmission exists between the associated AP and a terminal device, the terminal device may be in a wake-up state. If no data transmission exists between the associated AP and a terminal device, the terminal may be in a sleep state. If the wake-up policy is executed for a terminal (for example, as shown above, the associated AP sends the wake-up indication to the terminal device), the terminal device may be in a wake-up state in the scanning duration. This further improves the coordinated scanning measurement effect. Table 5 shows a wake-up effect of a terminal device. Based on a comparison of tests performed on all terminal devices, in comparison with a solution in which the wake-up policy is not executed, in this embodiment of this application, a sleep proportion of a terminal device can be significantly reduced after the wake-up policy is executed.

**Table 5**

| Test terminal device | Operating system | Sleep proportion (where a wake-up policy is executed) | Sleep proportion (where a wake-up policy is not executed) | Terminal device model |
|---|---|---|---|---|
| Terminal device 1 | Operating system 1 | 20.18% | 86% | Model 1 |
| Terminal device 2 | Operating system 1 | 19.97% | 86% | Model 2 |
| Terminal device 3 | Operating system 2 | 33.96% | 77% | Model 3 |
| Terminal device 4 | Operating system 2 | 4.22% | 66% | Model 4 |
| Terminal device 5 | Operating system 3 | 58.53% | 93% | Model 5 |

In addition, refer to two rounds of tests (namely, a test 1 and a test 2) in Table 6. It can be learned that, in this embodiment of this application, a sleep proportion of a terminal can be adjusted by executing different wake-up policies. For example, an interval of wake-up indications is improved from a second level to a millisecond level (for example, improved from 1s to 100 ms), and a sleep proportion of each model of terminal device can be significantly reduced.

**Table 6**

| Terminal device | Test | Second-level wakeup (sleep proportion) | Millisecond-level wakeup (sleep proportion) |
|---|---|---|---|
| Terminal device 1 | Test 1 | 85.81% | 0.43% |
| | Test 2 | 87.36% | 0.10% |
| Terminal device 2 | Test 1 | 74.46% | 14.43% |
| | Test 2 | 75.74% | 16.38% |
| Terminal device 3 | Test 1 | 69.89% | 0.08% |
| | Test 2 | 69.13% | 0.05% |
| Terminal device 4 | Test 1 | 93.71% | 12.50% |
| | Test 2 | 73.17% | 14.46% |
| Terminal device 5 | Test 1 | 79.41 % | 26.48% |
| | Test 2 | 78.47% | 24.62% |
| Terminal device 6 | Test 1 | 92.90% | 29.70% |
| | Test 2 | 92.99% | 28.62% |

It should be noted that the methods provided in embodiments of this application may be implemented separately, or may be implemented in combination. This is not limited.

It may be understood that in embodiments of this application, an execution body may perform some or all of the steps in embodiments of this application. The steps or operations are merely examples. Embodiments of this application may further include performing other operations or variations of various operations. In addition, the steps may be performed in a sequence different from a sequence presented in embodiments of this application, and not all the operations in embodiments of this application may be performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the devices may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

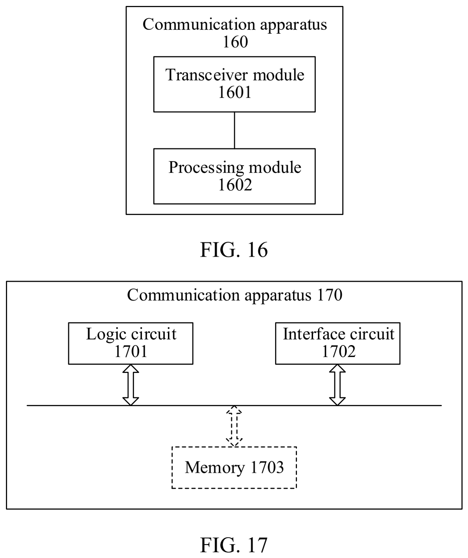

When each functional module is obtained through division based on each corresponding function, FIG. 16 shows a communication apparatus 160. The communication apparatus 160 may perform actions performed by the AP in FIG. 4 to FIG. 15, perform actions performed by the terminal device in FIG. 4 to FIG. 15, or perform actions performed by the first device in FIG. 4 to FIG. 15.

The communication apparatus 160 may include a transceiver module 1601 and a processing module 1602. For example, the communication apparatus 160 may be a communication device, may be a chip used in the communication device, or another combined device or component that has a function of the foregoing communication apparatus. When the communication apparatus 160 is the communication device, the transceiver module 1601 may be a transceiver. The transceiver may include an antenna, a radio frequency circuit, and the like. The processing module 1602 may be a processor (or a processing circuit), for example, a baseband processor. The baseband processor may include one or more CPUs. When the communication apparatus 160 is the component that has the function of the communication apparatus, the transceiver module 1601 may be a radio frequency unit, and the processing module 1602 may be a processor (or a processing circuit), for example, a baseband processor. When the communication apparatus 160 is a chip system, the transceiver module 1601 may be an input/output interface of a chip (for example, a baseband chip), and the processing module 1602 may be a processor (or a processing circuit) of the chip system, and may include one or more central processing units. It should be understood that the transceiver module 1601 in this embodiment of this application may be implemented by a transceiver or a transceiver-related circuit component, and the processing module 1602 may be implemented by a processor or a processor-related circuit component (or referred to as a processing circuit).

For example, the transceiver module 1601 may be configured to perform all sending and receiving operations performed by the communication apparatus in the embodiments shown in FIG. 4 to FIG. 15, and/or configured to support another process of the technology described in this specification. The processing module 1602 may be configured to perform all operations other than sending and receiving operations performed by the communication apparatus in the embodiments shown in FIG. 4 to FIG. 15, and/or configured to support another process of the technology described in this specification.

In a first possible example, an example in which the communication apparatus 160 may perform the actions performed by the second AP is used. The transceiver module 1601 may be configured to receive a scanning synchronization message, where the scanning synchronization message indicates at least one target scanning channel, and the scanning synchronization message indicates the second AP to switch a scanning channel in a sequence of the at least one target scanning channel. The transceiver module 1601 may be further configured to obtain a coordinated scanning measurement request, where the coordinated scanning measurement request carries an identifier of one or more terminal devices, the coordinated scanning measurement request is used to request the second AP to initiate a measurement request to the one or more terminal devices, and the one or more terminal devices are terminal devices associated with the first AP. The transceiver module 1601 may be further configured to: when the processing module 1602 determines that the scanning channel of the second AP is switched to an operating channel of a first AP, send the measurement request to the one or more terminal devices.

In a possible design, the transceiver module 1601 may be specifically configured to receive the scanning synchronization message sent by the first AP, where the at least one target scanning channel is the operating channel of the first AP.

In a possible design, the coordinated scanning measurement request is carried in the scanning synchronization message.

In a possible design, the transceiver module 1601 may be specifically configured to receive the scanning synchronization message sent by a first device.

In a possible design, the processing module 1602 may be specifically configured to switch the scanning channel in the sequence of the at least one target scanning channel.

In a possible design, the transceiver module 1601 may be specifically configured to send the measurement request to the one or more terminal devices in scanning duration.

In a possible design, the transceiver module 1601 may be further configured to send a coordinated scanning measurement response to the first AP, where the coordinated scanning measurement response indicates a measurement request record that has been sent by the second AP to the one or more terminal devices.

In a possible design, the transceiver module 1601 may be further configured to periodically receive the scanning synchronization message.

In a possible design, the transceiver module 1601 may be further configured to: receive a scanning synchronization inquiry request from the first device, and send a scanning synchronization inquiry response to the first device, where the scanning synchronization inquiry request is used to request to obtain a scanning channel to which the second AP switches last time, and the scanning synchronization inquiry response indicates the scanning channel to which the second AP switches last time.

In a second possible example, an example in which the communication apparatus 160 may perform the actions performed by the first AP is used. The transceiver module 1601 may be configured to receive a scanning synchronization message, where the scanning synchronization message indicates at least one target scanning channel, and the scanning synchronization message indicates the first AP to switch a scanning channel in a sequence of the at least one target scanning channel. The transceiver module 1601 may be further configured to: when the processing module 1602 determines that the scanning channel of the first AP is switched to an operating channel of the first AP, send a coordinated scanning measurement request to one or a plurality of second APs, where the coordinated scanning measurement request carries an identifier of one or more terminal devices, the coordinated scanning measurement request is used to request each second AP to initiate a measurement request to the one or more terminal devices, and the one or more terminal devices are terminal devices associated with the first AP. The transceiver module 1601 and the processing module 1602 may be further configured to obtain a measurement result, where the measurement result indicates a signal strength between each of at least one second AP and at least one terminal device, the one or the plurality of second APs include the at least one second AP, and the one or more terminal devices include the at least one terminal device.

In a possible design, the processing module 1602 may be further configured to switch from the scanning channel of the first AP to a target scanning channel in the at least one target scanning channel in the sequence of the at least one target scanning channel.

In a possible design, the transceiver module 1601 may be further configured to send first indication information to a first device, where the first indication information indicates a first target scanning channel, the first target scanning channel is the operating channel of the first AP, and the at least one target scanning channel includes the first target scanning channel.

In a possible design, the transceiver module 1601 may be further configured to periodically receive the scanning synchronization message.

In a possible design, the transceiver module 1601 may be further configured to: receive a scanning synchronization inquiry request, and send a scanning synchronization inquiry response, where the scanning synchronization inquiry response indicates a scanning channel to which the first AP switches last time.

In a possible design, the transceiver module 1601 may be further configured to: when the processing module 1602 determines that the scanning channel of the first AP is switched to the operating channel of the first AP, send a wake-up indication to the one or more terminal devices.

In a possible design, the transceiver module 1601 may be specifically configured to send the wake-up indication to the one or more terminal devices in first duration, where the first duration is greater than or equal to scanning duration, and the scanning duration is duration of a scanning channel.

In a possible design, the first duration is greater than the scanning duration, a start moment of the first duration is earlier than a start moment of the scanning duration, and an end moment of the first duration is later than an end moment of the scanning duration.

In a possible design, a difference between the start moment of the first duration and the start moment of the scanning duration is a first threshold, a difference between the end moment of the first duration and the end moment of the scanning duration is a second threshold, and both the first threshold and the second threshold are greater than or equal to a maximum value of random backoff duration of the plurality of second APs.

In a possible design, the first AP receives a measurement report of a first terminal device, and obtains the measurement result based on the measurement report, where the one or more terminal devices include the first terminal device.

In a possible design, when the first AP receives no measurement report about a third AP from a second terminal device in second duration, the first AP determines that a signal strength between the third AP and the second terminal device is less than a signal strength threshold, where the one or more terminal devices include the second terminal device, and the one or the plurality of second APs include the third AP.

In a third possible example, an example in which the communication apparatus 160 may perform the actions performed by the first AP is used. The transceiver module 1601 may be configured to send a scanning synchronization message to one or a plurality of second APs, where the scanning synchronization message indicates at least one target scanning channel, and the scanning synchronization message indicates each first AP to switch a scanning channel in a sequence of the at least one target scanning channel. The transceiver module 1601 may be further configured to send a coordinated scanning measurement request to the one or the plurality of second APs, where the coordinated scanning measurement request carries an identifier of one or more terminal devices, the coordinated scanning measurement request is used to request each second AP to initiate a measurement request to the one or more terminal devices, and the one or more terminal devices are terminal devices associated with the first AP. The transceiver module 1601 and the processing module 1602 may be further configured to obtain a measurement result, where the measurement result indicates a signal strength between each of at least one second AP and at least one terminal device, the one or the plurality of second APs include the at least one second AP, and the one or more terminal devices include the at least one terminal device.

In a possible design, the coordinated scanning measurement request is carried in the scanning synchronization message.

In a possible design, the transceiver module 1601 may be further configured to: when the processing module 1602 determines that a scanning channel of the first AP is switched to an operating channel of the first AP, send a wake-up indication to the one or more terminal devices.

In a possible design, the transceiver module 1601 may be specifically configured to send the wake-up indication to the one or more terminal devices in first duration, where the first duration is greater than or equal to scanning duration, and the scanning duration is duration of a scanning channel.

In a possible design, the first duration is greater than the scanning duration, a start moment of the first duration is earlier than a start moment of the scanning duration, and an end moment of the first duration is later than an end moment of the scanning duration.

In a possible design, a difference between the start moment of the first duration and the start moment of the scanning duration is a first threshold, a difference between the end moment of the first duration and the end moment of the scanning duration is a second threshold, and both the first threshold and the second threshold are greater than or equal to a maximum value of random backoff duration of the plurality of second APs.

In a possible design, the transceiver module 1601 may be further configured to receive a measurement report of a first terminal device, and the processing module 1602 may be further configured to obtain the measurement result based on the measurement report, where the one or more terminal devices include the first terminal device.

In a possible design, the processing module 1602 may be further configured to: when the transceiver module 1601 receives no measurement report about a third AP from a second terminal device in second duration, determine that a signal strength between the third AP and the second terminal device is less than a signal strength threshold, where the one or more terminal devices include the second terminal device, and the one or the plurality of second APs include the third AP.

In a fourth possible example, an example in which the communication apparatus 160 may perform the actions performed by the first terminal device is used. The transceiver module 1601 may be configured to receive a wake-up indication from a first AP in first duration, where the first terminal device is a terminal device associated with the first AP, the first duration is greater than or equal to scanning duration, and the scanning duration is duration of a scanning channel. The transceiver module 1601 may be further configured to: receive one or more measurement requests in the first duration, and send a measurement report to the first AP based on the one or more measurement requests, where the measurement report indicates a signal strength between the first terminal device and corresponding one or a plurality of second APs that send the one or more measurement requests.

In a possible design, the first duration is greater than the scanning duration, a start moment of the first duration is earlier than a start moment of the scanning duration, and an end moment of the first duration is later than an end moment of the scanning duration.

In a possible design, a difference between the start moment of the first duration and the start moment of the scanning duration is a first threshold, a difference between the end moment of the first duration and the end moment of the scanning duration is a second threshold, and both the first threshold and the second threshold are greater than or equal to a maximum value of random backoff duration of the plurality of second APs.

In still another possible implementation, the transceiver module 1601 in FIG. 16 may be replaced with a transceiver, functions of the transceiver module 1601 may be integrated into the transceiver, the processing module 1602 may be replaced with a processor, and functions of the processing module 1602 may be integrated into the processor. Further, the communication apparatus 160 shown in FIG. 16 may further include a memory.

Alternatively, when the processing module 1602 is replaced with a processor, and the transceiver module 1601 is replaced with a transceiver, the communication apparatus 160 in this embodiment of this application may alternatively be a communication apparatus 170 shown in FIG. 17. The processor may be a logic circuit 1701, and the transceiver may be an interface circuit 1702. Further, the communication apparatus 170 shown in FIG. 17 may further include a memory 1703.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmit end and/or a data receive end), for example, a hard disk drive or a memory of the terminal. The foregoing computer-readable storage medium may alternatively be an external storage device of the foregoing terminal, for example, a plug-in hard disk, a smart memory card (smart media card, SMC), a secure digital (secure digital, SD) card, and a flash card (flash card) that are configured on the foregoing terminal. Further, the computer-readable storage medium may further include both an internal storage unit and an external storage device of the foregoing terminal. The computer-readable storage medium is configured to store the computer program and other programs and data needed by the foregoing terminal. The computer-readable storage medium may be further configured to temporarily store data that has been output or is to be output.

It should be noted that in the specification, claims, and accompanying drawings of this application, the terms "first", "second", and the like are intended to distinguish between different objects, but are not intended to describe a particular sequence. "First" and "second" are only intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more. "A plurality of" means two or more than two. "At least two (items)" means two, three, or more. "And/or" is for describing an association relationship between associated objects and indicates that three relationships may exist. For example, "A and/or B" may indicate three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c, or at least one item (piece) of a, b, and c may indicate: a, b, c, "a and b", "a and c", "b and c", or "a and b and c", where a, b, and c may be singular or plural. Both "when" and "if" mean that corresponding processing is performed in an objective case, but are not intended to limit time. In addition, the terms do not necessarily mean that a determining action is needed during implementation, and do not mean any other limitation either.

In embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In several embodiments provided in this application, it should be understood that the disclosed apparatus and method may be implemented in other manners. For example, the described apparatus embodiments are merely examples. For example, the module or division into the units is merely logical function division and may be other division in actual implementation. For example, a plurality of units or components may be combined or integrated into another apparatus, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

## Claims

1. A signal strength measurement system, wherein the system comprises a plurality of access points APs, and the plurality of APs comprise a first AP and one or a plurality of second APs;
the one or the plurality of second APs are configured to receive a scanning synchronization message, wherein the scanning synchronization message indicates at least one target scanning channel, and the scanning synchronization message indicates each second AP to switch a scanning channel in a sequence of the at least one target scanning channel;
the first AP is configured to: when determining that a scanning channel of the system is an operating channel of the first AP, send a coordinated scanning measurement request to the one or the plurality of second APs, wherein the coordinated scanning measurement request carries an identifier of one or more terminal devices, the coordinated scanning measurement request is used to request each second AP to initiate a measurement request to the one or more terminal devices, and the one or more terminal devices are terminal devices associated with the first AP;
any second AP is further configured to: when a scanning channel of the any second AP is switched to the operating channel of the first AP, send the measurement request to the one or more terminal devices; and
the first AP is further configured to obtain a measurement result, wherein the measurement result indicates a signal strength between each of at least one second AP and at least one terminal device, the one or the plurality of second APs comprise the at least one second AP, and the one or more terminal devices comprise the at least one terminal device.

2. The system according to claim 1, wherein the first AP is further configured to send the scanning synchronization message, and the at least one target scanning channel is the operating channel of the first AP.

3. The system according to claim 2, wherein the coordinated scanning measurement request is carried in the scanning synchronization message.

4. The system according to claim 1, wherein the system further comprises a first device, and the first device is configured to send the scanning synchronization message to the plurality of APs.

5. The system according to claim 4, wherein the first AP is further configured to:
switch from a scanning channel of the first AP to a target scanning channel in the at least one target scanning channel in the sequence of the at least one target scanning channel; and
when the scanning channel of the first AP is switched to the operating channel of the first AP, determine that the scanning channel of the system is the operating channel of the first AP.

6. The system according to claim 4 or 5, wherein
the first AP is further configured to send first indication information to the first device, wherein the first indication information indicates a first target scanning channel, and the first target scanning channel is the operating channel of the first AP; and
the first device is further configured to generate the scanning synchronization message based on the first indication information, wherein the at least one target scanning channel comprises the first target scanning channel.

7. The system according to any one of claims 4 to 6, wherein the first device is further configured to:
periodically send the scanning synchronization message to the plurality of APs;
send the scanning synchronization message to the plurality of APs in a preset time period; or
send the scanning synchronization message to the plurality of APs in response to a difference between scanning channels of at least two APs being greater than or equal to a channel difference threshold.

8. The system according to claim 7, wherein
the first device is further configured to send a scanning synchronization inquiry request to the plurality of APs, wherein the scanning synchronization inquiry request is used to request a scanning channel to which each AP switches last time;
any AP in the plurality of APs is further configured to: receive the scanning synchronization inquiry request, and send a scanning synchronization inquiry response to the first device, wherein the scanning synchronization inquiry response indicates a scanning channel to which the any AP switches last time; and
the first device is further configured to determine a difference between scanning channels of any two APs based on scanning synchronization inquiry responses of the any two APs in the plurality of APs.

9. The system according to any one of claims 1 to 8, wherein
the first AP is further configured to: when determining that the scanning channel of the system is the operating channel of the first AP, send a wake-up indication to the one or more terminal devices.

10. The system according to claim 9, wherein
the first AP is further configured to send the wake-up indication to the one or more terminal devices in first duration, wherein the first duration is greater than or equal to scanning duration, and the scanning duration is duration of a scanning channel.

11. The system according to claim 10, wherein the first duration is greater than the scanning duration, a start moment of the first duration is earlier than a start moment of the scanning duration, and an end moment of the first duration is later than an end moment of the scanning duration.

12. The system according to claim 11, wherein a difference between the start moment of the first duration and the start moment of the scanning duration is a first threshold, a difference between the end moment of the first duration and the end moment of the scanning duration is a second threshold, and both the first threshold and the second threshold are greater than or equal to a maximum value of random backoff duration of the plurality of second APs.

13. The system according to any one of claims 1 to 12, wherein
the first AP is further configured to: receive a measurement report of a first terminal device, and obtain the measurement result based on the measurement report, wherein the one or more terminal devices comprise the first terminal device.

14. The system according to any one of claims 1 to 13, wherein
the first AP is further configured to: when the first AP receives no measurement report about a third AP from a second terminal device in second duration, determine that a signal strength between the third AP and the second terminal device is less than a signal strength threshold, wherein the one or more terminal devices comprise the second terminal device, and the one or the plurality of second APs comprise the third AP.

15. A signal strength measurement method, applied to a second access point AP, wherein the method comprises:
receiving, by the second AP, a scanning synchronization message, wherein the scanning synchronization message indicates at least one target scanning channel, and the scanning synchronization message indicates the second AP to switch a scanning channel in a sequence of the at least one target scanning channel;
obtaining, by the second AP, a coordinated scanning measurement request, wherein the coordinated scanning measurement request carries an identifier of one or more terminal devices, the coordinated scanning measurement request is used to request the second AP to initiate a measurement request to the one or more terminal devices, and the one or more terminal devices are terminal devices associated with a first AP; and
when the scanning channel of the second AP is switched to an operating channel of the first AP, sending, by the second AP, the measurement request to the one or more terminal devices.

16. The method according to claim 15, wherein receiving, by the second AP, the scanning synchronization message comprises:
receiving, by the second AP, the scanning synchronization message sent by the first AP, wherein the at least one target scanning channel is the operating channel of the first AP.

17. The method according to claim 16, wherein the coordinated scanning measurement request is carried in the scanning synchronization message.

18. The method according to claim 15, wherein receiving, by the second AP, the scanning synchronization message comprises:
receiving, by the second AP, the scanning synchronization message sent by a first device.

19. The method according to any one of claims 15 to 18, wherein the method further comprises:
switching, by the second AP, the scanning channel in the sequence of the at least one target scanning channel.

20. The method according to any one of claims 15 to 19, wherein sending, by the second AP, the measurement request to the one or more terminal devices comprises:
sending, by the second AP, the measurement request to the one or more terminal devices in scanning duration.

21. The method according to any one of claims 15 to 20, wherein the method further comprises:
sending, by the second AP, a coordinated scanning measurement response to the first AP, wherein the coordinated scanning measurement response indicates a measurement request record that has been sent by the second AP.

22. The method according to any one of claims 15 to 21, wherein the method further comprises:
periodically receiving, by the second AP, the scanning synchronization message.

23. The method according to any one of claims 15 to 22, wherein the method further comprises:
receiving, by the second AP, a scanning synchronization inquiry request from the first device, wherein the scanning synchronization inquiry request is used to request to obtain a scanning channel to which the second AP switches last time; and
sending, by the second AP, a scanning synchronization inquiry response to the first device, wherein the scanning synchronization inquiry response indicates the scanning channel to which the second AP switches last time.

24. A signal strength measurement method, applied to a first access point AP, wherein the method comprises:
receiving, by the first AP, a scanning synchronization message, wherein the scanning synchronization message indicates at least one target scanning channel, and the scanning synchronization message indicates the first AP to switch a scanning channel in a sequence of the at least one target scanning channel;
when the scanning channel of the first AP is switched to an operating channel of the first AP, sending, by the first AP, a coordinated scanning measurement request to one or a plurality of second APs, wherein the coordinated scanning measurement request carries an identifier of one or more terminal devices, the coordinated scanning measurement request is used to request each second AP to initiate a measurement request to the one or more terminal devices, and the one or more terminal devices are terminal devices associated with the first AP; and
obtaining, by the first AP, a measurement result, wherein the measurement result indicates a signal strength between each of at least one second AP and at least one terminal device, the one or the plurality of second APs comprise the at least one second AP, and the one or more terminal devices comprise the at least one terminal device.

25. The method according to claim 24, wherein the method further comprises:
switching, by the first AP, from the scanning channel of the first AP to a target scanning channel in the at least one target scanning channel in the sequence of the at least one target scanning channel.

26. The method according to claim 24 or 25, wherein the method further comprises:
sending, by the first AP, first indication information to a first device, wherein the first indication information indicates a first target scanning channel, the first target scanning channel is the operating channel of the first AP, and the at least one target scanning channel comprises the first target scanning channel.

27. The method according to any one of claims 24 to 26, wherein the method further comprises:
periodically receiving, by the first AP, the scanning synchronization message.

28. The method according to any one of claims 24 to 27, wherein the method further comprises:
the first AP is further configured to: receive a scanning synchronization inquiry request, and send a scanning synchronization inquiry response, wherein the scanning synchronization inquiry response indicates a scanning channel to which the first AP switches last time.

29. The method according to any one of claims 24 to 28, wherein the method further comprises:
when the scanning channel of the first AP is switched to the operating channel of the first AP, sending, by the first AP, a wake-up indication to the one or more terminal devices.

30. The method according to claim 29, wherein the method further comprises:
sending, by the first AP, the wake-up indication to the one or more terminal devices in first duration, wherein the first duration is greater than or equal to scanning duration, and the scanning duration is duration of a scanning channel.

31. The method according to claim 30, wherein the first duration is greater than the scanning duration, a start moment of the first duration is earlier than a start moment of the scanning duration, and an end moment of the first duration is later than an end moment of the scanning duration.

32. The method according to claim 31, wherein a difference between the start moment of the first duration and the start moment of the scanning duration is a first threshold, a difference between the end moment of the first duration and the end moment of the scanning duration is a second threshold, and both the first threshold and the second threshold are greater than or equal to a maximum value of random backoff duration of the plurality of second APs.

33. The method according to any one of claims 24 to 32, wherein the method further comprises:
receiving, by the first AP, a measurement report of a first terminal device, and obtaining the measurement result based on the measurement report, wherein the one or more terminal devices comprise the first terminal device.

34. The method according to any one of claims 24 to 33, wherein the method further comprises:
when the first AP receives no measurement report about a third AP from a second terminal device in second duration, determining, by the first AP, that a signal strength between the third AP and the second terminal device is less than a signal strength threshold, wherein the one or more terminal devices comprise the second terminal device, and the one or the plurality of second APs comprise the third AP.

35. A signal strength measurement method, applied to a first access point AP, wherein the method comprises:
sending, by the first AP, a scanning synchronization message to one or a plurality of second APs, wherein the scanning synchronization message indicates at least one target scanning channel, and the scanning synchronization message indicates each second AP to switch a scanning channel in a sequence of the at least one target scanning channel;
sending, by the first AP, a coordinated scanning measurement request to the one or the plurality of second APs, wherein the coordinated scanning measurement request carries an identifier of one or more terminal devices, the coordinated scanning measurement request is used to request each second AP to initiate a measurement request to the one or more terminal devices, and the one or more terminal devices are terminal devices associated with the first AP; and
obtaining, by the first AP, a measurement result, wherein the measurement result indicates a signal strength between each of at least one second AP and at least one terminal device, the one or the plurality of second APs comprise the at least one second AP, and the one or more terminal devices comprise the at least one terminal device.

36. A signal strength measurement method, applied to a first terminal device, wherein the method comprises:
receiving, by the first terminal device in first duration, a wake-up indication from a first access point AP, wherein the first terminal device is a terminal device associated with the first AP, the first duration is greater than or equal to scanning duration, and the scanning duration is duration of a scanning channel;
receiving, by the first terminal device, one or more measurement requests in the first duration; and
sending, by the first terminal device, a measurement report to the first AP based on the one or more measurement requests, wherein the measurement report indicates a signal strength between one or a plurality of second APs that send the one or more measurement requests and the first terminal device.

37. The method according to claim 36, wherein the first duration is greater than the scanning duration, a start moment of the first duration is earlier than a start moment of the scanning duration, and an end moment of the first duration is later than an end moment of the scanning duration.

38. The method according to claim 37, wherein a difference between the start moment of the first duration and the start moment of the scanning duration is a first threshold, a difference between the end moment of the first duration and the end moment of the scanning duration is a second threshold, and both the first threshold and the second threshold are greater than or equal to a maximum value of random backoff duration of the plurality of second APs.

39. A communication apparatus, wherein the communication apparatus comprises a processor; and the processor is configured to run a computer program or instructions, to enable the communication apparatus to perform the signal strength measurement method according to any one of claims 15 to 23, perform the signal strength measurement method according to any one of claims 24 to 34, perform the signal strength measurement method according to claim 35, or perform the signal strength measurement method according to any one of claims 36 to 38.

40. A computer-readable storage medium, wherein the computer-readable storage medium stores computer instructions or a program; and when the computer instructions or the program is run on a computer, the signal strength measurement method according to any one of claims 15 to 23 is performed, the signal strength measurement method according to any one of claims 24 to 34 is performed, the signal strength measurement method according to claim 35 is performed, or the signal strength measurement method according to any one of claims 36 to 38 is performed.

41. A computer program product, wherein the computer program product comprises computer instructions; and when a part or all of the computer instructions are run on a computer, the signal strength measurement method according to any one of claims 15 to 23 is performed, the signal strength measurement method according to any one of claims 24 to 34 is performed, the signal strength measurement method according to claim 35 is performed, or the signal strength measurement method according to any one of claims 36 to 38 is performed.
